# EUROPEAN PATENT APPLICATION

(11) **EP 4 657 782 A1**
(43) Date of publication of application: **03.12.2025**
(21) Application number: 24797322.5
(22) Date of filing: 11.04.2024
(51) Int. Cl.: H04L 1/00, H04L 27/26, H04L 5/00, H04W 84/12

(54) **METHOD AND DEVICE FOR RECEIVING PPDU IN WIRELESS LAN SYSTEM**

(30) Priority: 28.04.2023 KR 20230056366; 02.05.2023 KR 20230057161
(71) Applicant: LG Electronics Inc., Yeongdeungpo-gu Seoul 07336 (KR)
(72) Inventor: LIM, Dongguk, Seoul 06772 (KR); CHUN, Jinyoung, Seoul 06772 (KR); CHOI, Jinsoo, Seoul 06772 (KR); PARK, Eunsung, Seoul 06772 (KR)
(74) Representative: Plasseraud IP
(86) International application number: PCT/KR2024/004792
(87) International publication number: WO 2024/225666

(57) **Abstract**

A method and a device for receiving a PPDU in a wireless LAN system are presented. Particularly, a reception STA receives the PPDU from a transmission STA and decodes same. The PPDU includes: first and second signal fields; and a data field. The first signal field includes information that the data field is transmitted, within one MRU, by a first MCS being applied to a first frequency block and a second MCS being applied to a second frequency block. The second signal field includes a common field and a user-specific field. The common field includes RU allocation information about the first and second frequency blocks within the one MRU. The user-specific field includes a first user field for the first frequency block and a second user field for the second frequency block.

## Description

### TECHNICAL FIELD

This specification relates to a technique for receiving a PPDU in a wireless LAN system, and more specifically, to a method and device for configuring a signal field for transmitting data by applying different MCSs and Nss to two blocks in an MRU.

### BACKGROUND ART

A wireless local area network (WLAN) has been improved in various ways. For example, the IEEE 802.11ax standard proposed an improved communication environment using orthogonal frequency division multiple access (OFDMA) and downlink multi-user multiple input multiple output (DL MU MIMO) techniques.

The present specification proposes a technical feature that can be utilized in a new communication standard. For example, the new communication standard may be an extreme high throughput (EHT) standard which is currently being discussed. The EHT standard may use an increased bandwidth, an enhanced PHY layer protocol data unit (PPDU) structure, an enhanced sequence, a hybrid automatic repeat request (HARQ) scheme, or the like, which is newly proposed. The EHT standard may be called the IEEE 802.1 The standard.

In a new WLAN standard, an increased number of spatial streams may be used. In this case, in order to properly use the increased number of spatial streams, a signaling technique in the WLAN system may need to be improved.

### DISCLOSURE

### TECHNICAL PROBLEM

This specification proposes a method and device for receiving a PPDU in a wireless LAN system.

### TECHNICAL SOLUTION

An example of this specification proposes a method for receiving a PPDU.

This embodiment may be performed in a network environment that supports a next-generation wireless LAN system (Ultra High Reliability (UHR) wireless LAN system or next Wi-Fi). The next-generation wireless LAN system is an improved version of the 802.11be system and can satisfy backward compatibility with the 802.11be system.

This embodiment is performed at a receiving STA, and the receiving STA may correspond to at least one station (STA). The transmitting STA may correspond to an access point (AP).

This embodiment proposes a method for configuring a signal field for transmitting data by applying different MCSs and Nss to two blocks within an MRU. In particular, the present embodiment proposes a method for allocating two blocks within an MRU through one RU allocation subfield within the signal field, and configuring a separate user field for each of the two blocks to indicate the MCS and Nss applied to each block.

A receiving station (STA) receives a Physical layer protocol data unit (PPDU) from a transmitting STA.

The receiving STA decodes the PPDU.

The PPDU includes first and second signal fields and a data field.

The first signal field includes information that the data field is transmitted using/based on a first Modulation and Coding Scheme (MCS) applied to a first frequency block and a second MCS applied to a second frequency block within a single Multiple Resource Unit (MRU).

The second signal field includes a common field and a user-specific field. The common field includes Resource Unit (RU) allocation information for the first and second frequency blocks within the single MRU.

The user-specific field includes a first user field for the first frequency block and a second user field for the second frequency block. The first and second user fields are user fields for a single receiving STA (or the same receiving STA). The first user field includes information for the first MCS applied to the first frequency block. The second user field includes information for the second MCS applied to the second frequency block.

The first signal field may further include information that the data field is transmitted using/based on the first and second Number of Spatial Streams (Nss) within the single MRU.

The first user field may further include information for the first Nss applied to the first frequency block. The second user field may further include information for the second Nss applied to the second frequency block.

Based on a channel status of the first and second frequency blocks, the first frequency block may be transmitted using/based on the first MCS and the first Nss, and the second frequency block may be transmitted using/based on the second MCS and the second Nss. The sum of the first and second Nss may not exceed 8.

In the past, there was a problem that the overall transmission efficiency and throughput decreased when transmitting a signal by commonly applying transmission parameters to MRUs even when the channel status of a specific channel within an MRU was poor due to OBSS, fading, etc. Therefore, this embodiment proposes a method of transmitting a signal by applying different transmission parameters to each block by considering the channel condition of a specific block (or RU) within a single MRU. That is, this embodiment proposes a method of configuring one RU allocation subfield and two user fields in order to apply different MCS and Nss to each block within the single MRU.

### ADVANTAGEOUS EFFECTS

According to the embodiment proposed in this specification, by transmitting a signal by applying transmission parameters suitable for the channel condition to each block within one MRU, there is an effect of improving the overall transmission efficiency and throughput compared to applying common (or unified) transmission parameters to one MRU.

### BRIEF DESCRIPTION OF THE DRAWINGS

FIG. 1 shows an example of a transmitting apparatus and/or receiving apparatus of the present specification.
FIG. 2 is a conceptual view illustrating the structure of a wireless local area network (WLAN).
FIG. 3 illustrates a general link setup process.
FIG. 4 shows an example of a multi-link (ML).
FIG. 5 shows an example of a physical protocol data unit or physical layer (PHY) protocol data unit (PPDU) transmitted/received by an STA of the present disclosure.
FIG. 6 is a diagram illustrating the layout of resource units (RUs) used for a 20 MHz PPDU.
FIG. 7 is a diagram illustrating the layout of resource units (RUs) used for 40MHz PPDU.
FIG. 8 is a diagram illustrating the layout of resource units (RUs) used for an 80MHz PPDU.
FIG. 9 shows an operation related to UL-MU.
FIG. 10 illustrates an example of channels used/supported/defined within the 2.4 GHz band.
FIG. 11 illustrates an example of channels used/supported/defined within the 5 GHz band.
FIG. 12 illustrates an example of channels used/supported/defined within the 6 GHz band.
FIG. 13 shows an example of a header of a MAC frame.
FIG. 14 illustrates an example of a modified transmission device and/or receiving device of the present specification.
FIG. 15 illustrates an example of an EHT-SIG content channel for 320 MHz OFDMA transmission.
FIG. 16 illustrates an example of an EHT-SIG content channel for EHT SU transmission.
FIG. 17 illustrates an example of an RU Allocation subfield defined in an 802.11be WLAN system.
FIG. 18 illustrates an example of an RU Allocation subfield defined in an 802.11be WLAN system.
FIG. 19 illustrates an example of an RU Allocation subfield defined in an 802.11be WLAN system.
FIG. 20 illustrates an example of an RU Allocation subfield defined in an 802.11be WLAN system.
FIG. 21 illustrates an example of an RU Allocation subfield defined in an 802.11be WLAN system.
FIG. 22 illustrates an example of an RU Allocation subfield defined in an 802.11be WLAN system.
FIG. 23 illustrates an example of the RU Allocation subfield defined in an 802.11be WLAN system.
FIG. 24 illustrates an example of the RU Allocation subfield defined in an 802.11be WLAN system.
FIG. 25 illustrates an example of the RU Allocation subfield defined in an 802.11be WLAN system.
FIG. 26 illustrates the arrangement of 484+242-tone MRUs in an 80MHz bandwidth.
FIG. 27 illustrates the arrangement of 996+484-tone MRUs in a 160MHz bandwidth.
FIG. 28 illustrates the arrangement of 996+484+242-tone MRUs in a 160MHz bandwidth.
FIG. 29 illustrates the arrangement of 2x996+484-tone MRUs in a 320MHz bandwidth.
FIG. 30 illustrates the layout of 3x996-tone MRUs in a 320 MHz bandwidth.
FIG. 31 illustrates the layout of 3x996+484-tone MRUs in a 320 MHz bandwidth.
FIG. 32 illustrates an example of a UHR-SIG content channel for SU transmission.
FIG. 33 illustrates an example of a newly defined user field.
FIG. 34 is a flowchart illustrating the operation of a transmitting device according to the present embodiment.
FIG. 35 is a flowchart illustrating the operation of a receiving device according to the present embodiment.
FIG. 36 is a flowchart illustrating a procedure for transmitting a PPDU according to the present embodiment.
FIG. 37 is a flowchart illustrating a procedure for receiving a PPDU according to the present embodiment.

### MODE FOR INVENTION

In the present disclosure, "A or B" may mean "only A", "only B" or "both A and B". In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, a parenthesis used in the present disclosure may mean "for example". Specifically, when indicated as "control information (UHR-signal field)", it may mean that "UHR-signal field" is proposed as an example of the "control information". In other words, the "control information" of the present disclosure is not limited to "UHR-signal field", and "UHR-signal field" may be proposed as an example of the "control information". In addition, when indicated as "control information (i.e., UHR-signal field)", it may also mean that "UHR-signal field" is proposed as an example of the "control information".

Also, "a/an" as used in this disclosure can mean "at least one" or "one or more." Also, a term ending with "(s)" can mean "at least one" or "one or more."

Also, the expressions "based on" or "on the basis of" or "according to" as used in this disclosure mean "based at least in part on," and do not mean "based sonly on."

Technical features described individually in one figure in the present disclosure may be individually implemented, or may be simultaneously implemented.

The following example of the present disclosure may be applied to various wireless communication systems. For example, the following example of the present disclosure may be applied to a wireless local area network (WLAN) system. For example, the present disclosure may be applied to the IEEE 802.11a/g/n/ac/ax/be/bn standard. In addition, an example of the present disclosure can also be applied to a next-generation wireless LAN standard that enhances the Ultra High Reliability (UHR) standard or IEEE 802.11bn. In addition, the example of the present disclosure may also be applied to a new WLAN standard enhanced from the EHT standard or the IEEE 802.11be standard. In addition, the example of the present disclosure may be applied to a mobile communication system. For example, it may be applied to a mobile communication system based on long term evolution (LTE) depending on a 3rd generation partnership project (3GPP) standard and based on evolution of the LTE. In addition, the example of the present disclosure may be applied to a communication system of a 5G NR standard based on the 3GPP standard.

Hereinafter, in order to describe a technical feature of the present disclosure, a technical feature applicable to the present disclosure will be described.

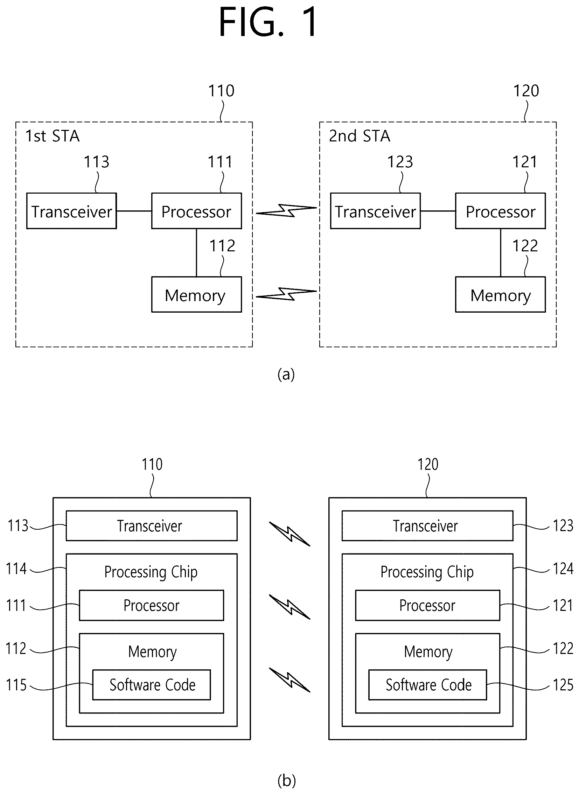

FIG. 1 shows an example of a transmitting apparatus and/or receiving apparatus of the present disclosure.

In the example of FIG. 1, various technical features described below may be performed. FIG. 1 relates to at least one station (STA). For example, STAs 110 and 120 of the present disclosure may also be called in various terms such as a mobile terminal, a wireless device, a wireless transmit/receive unit (WTRU), a user equipment (UE), a mobile station (MS), a mobile subscriber unit, or simply a user. The STAs 110 and 120 of the present disclosure may also be called in various terms such as a network, a base station, a node-B, an access point (AP), a repeater, a router, a relay, or the like. The STAs 110 and 120 of the present disclosure may also be referred to as various names such as a receiving apparatus, a transmitting apparatus, a receiving STA, a transmitting STA, a receiving device, a transmitting device, or the like.

For example, the STAs 110 and 120 may serve as an AP or a non-AP. That is, the STAs 110 and 120 of the present disclosure may serve as the AP and/or the non-AP. In the present disclosure, the AP may be indicated as an AP STA.

The STAs 110 and 120 of the present disclosure may support various communication standards together in addition to the IEEE 802.11 standard. For example, a communication standard (e.g., LTE, LTE-A, 5G NR standard) or the like based on the 3GPP standard may be supported. In addition, the STA of the present disclosure may be implemented as various devices such as a mobile phone, a vehicle, a personal computer, or the like. In addition, the STA of the present disclosure may support communication for various communication services such as voice calls, video calls, data communication, and self-driving (autonomous-driving), or the like.

The STAs 110 and 120 of the present disclosure may include a medium access control (MAC) conforming to the IEEE 802.11 standard and a physical layer interface for a radio medium.

The STAs 110 and 120 will be described below with reference to a sub-figure (a) of FIG. 1.

The first STA 110 may include a processor 111, a memory 112, and a transceiver 113. The illustrated process, memory, and transceiver may be implemented individually as separate chips, or at least two blocks/functions may be implemented through a single chip.

The transceiver 113 of the first STA performs a signal transmission/reception operation. Specifically, an IEEE 802.11 packet (e.g., IEEE 802.11a/b/g/n/ac/ax/be, etc.) may be transmitted/received.

For example, the first STA 110 may perform an operation intended by an AP. For example, the processor 111 of the AP may receive a signal through the transceiver 113, process a reception (RX) signal, generate a transmission (TX) signal, and provide control for signal transmission. The memory 112 of the AP may store a signal (e.g., RX signal) received through the transceiver 113, and may store a signal (e.g., TX signal) to be transmitted through the transceiver.

For example, the second STA 120 may perform an operation intended by a non-AP STA. For example, a transceiver 123 of a non-AP performs a signal transmission/reception operation. Specifically, an IEEE 802.11 packet (e.g., IEEE 802.11a/b/g/n/ac/ax/be packet, etc.) may be transmitted/received.

For example, a processor 121 of the non-AP STA may receive a signal through the transceiver 123, process an RX signal, generate a TX signal, and provide control for signal transmission. A memory 122 of the non-AP STA may store a signal (e.g., RX signal) received through the transceiver 123, and may store a signal (e.g., TX signal) to be transmitted through the transceiver.

For example, an operation of a device indicated as an AP in the disclosure described below may be performed in the first STA 110 or the second STA 120. For example, if the first STA 110 is the AP, the operation of the device indicated as the AP may be controlled by the processor 111 of the first STA 110, and a related signal may be transmitted or received through the transceiver 113 controlled by the processor 111 of the first STA 110. In addition, control information related to the operation of the AP or a TX/RX signal of the AP may be stored in the memory 112 of the first STA 110. In addition, if the second STA 120 is the AP, the operation of the device indicated as the AP may be controlled by the processor 121 of the second STA 120, and a related signal may be transmitted or received through the transceiver 123 controlled by the processor 121 of the second STA 120. In addition, control information related to the operation of the AP or a TX/RX signal of the AP may be stored in the memory 122 of the second STA 120.

For example, in the disclosure described below, an operation of a device indicated as a non-AP (or user-STA) may be performed in the first STA 110 or the second STA 120. For example, if the second STA 120 is the non-AP, the operation of the device indicated as the non-AP may be controlled by the processor 121 of the second STA 120, and a related signal may be transmitted or received through the transceiver 123 controlled by the processor 121 of the second STA 120. In addition, control information related to the operation of the non-AP or a TX/RX signal of the non-AP may be stored in the memory 122 of the second STA 120. For example, if the first STA 110 is the non-AP, the operation of the device indicated as the non-AP may be controlled by the processor 111 of the first STA 110, and a related signal may be transmitted or received through the transceiver 113 controlled by the processor 111 of the first STA 110. In addition, control information related to the operation of the non-AP or a TX/RX signal of the non-AP may be stored in the memory 112 of the first STA 110.

In the disclosure described below, a device called a (transmitting/receiving) STA, a first STA, a second STA, an STA1, an STA2, an AP, a first AP, a second AP, an AP1, an AP2, a (transmitting/receiving) terminal, a (transmitting/receiving) device, a (transmitting/receiving) apparatus, a network, or the like may imply the STAs 110 and 120 of FIG. 1. For example, a device indicated as, without a specific reference numeral, the (transmitting/receiving) STA, the first STA, the second STA, the STA1, the STA2, the AP, the first AP, the second AP, the AP1, the AP2, the (transmitting/receiving) terminal, the (transmitting/receiving) device, the (transmitting/receiving) apparatus, the network, or the like may imply the STAs 110 and 120 of FIG. 1. For example, in the following example, an operation in which various STAs transmit/receive a signal (e.g., a PPDU) may be performed in the transceivers 113 and 123 of FIG. 1. In addition, in the following example, an operation in which various STAs generate a TX/RX signal or perform data processing and computation in advance for the TX/RX signal may be performed in the processors 111 and 121 of FIG. 1. For example, an example of an operation for generating the TX/RX signal or performing the data processing and computation in advance may include: 1) an operation of determining/obtaining/configuring/computing/decoding/encoding bit information of a sub-field (SIG, STF, LTF, Data) included in a PPDU; 2) an operation of determining/configuring/obtaining a time resource or frequency resource (e.g., a subcarrier resource) or the like used for the sub-field (SIG, STF, LTF, Data) included the PPDU; 3) an operation of determining/configuring/obtaining a specific sequence (e.g., a pilot sequence, an STF/LTF sequence, an extra sequence applied to SIG) or the like used for the sub-field (SIG, STF, LTF, Data) field included in the PPDU; 4) a power control operation and/or power saving operation applied for the STA; and 5) an operation related to determining/obtaining/configuring/decoding/encoding or the like of an ACK signal. In addition, in the following example, a variety of information used by various STAs for determining/obtaining/configuring/computing/decoding/decoding a TX/RX signal (e.g., information related to a field/subfield/control field/parameter/power or the like) may be stored in the memories 112 and 122 of FIG. 1.

The aforementioned device/STA of the sub-figure (a) of FIG. 1 may be modified as shown in the sub-figure (b) of FIG. 1. Hereinafter, the STAs 110 and 120 of the present disclosure will be described based on the sub-figure (b) of FIG. 1.

For example, the transceivers 113 and 123 illustrated in the sub-figure (b) of FIG. 1 may perform the same function as the aforementioned transceiver illustrated in the sub-figure (a) of FIG. 1. For example, processing chips 114 and 124 illustrated in the sub-figure (b) of FIG. 1 may include the processors 111 and 121 and the memories 112 and 122. The processors 111 and 121 and memories 112 and 122 illustrated in the sub-figure (b) of FIG. 1 may perform the same function as the aforementioned processors 111 and 121 and memories 112 and 122 illustrated in the sub-figure (a) of FIG. 1.

A mobile terminal, a wireless device, a wireless transmit/receive unit (WTRU), a user equipment (UE), a mobile station (MS), a mobile subscriber unit, a user, a user STA, a network, a base station, a Node-B, an access point (AP), a repeater, a router, a relay, a receiving unit, a transmitting unit, a receiving STA, a transmitting STA, a receiving device, a transmitting device, a receiving apparatus, and/or a transmitting apparatus, which are described below, may imply the STAs 110 and 120 illustrated in the sub-figure (a)/(b) of FIG. 1, or may imply the processing chips 114 and 124 illustrated in the sub-figure (b) of FIG. 1. That is, a technical feature of the present disclosure may be performed in the STAs 110 and 120 illustrated in the sub-figure (a)/(b) of FIG. 1, or may be performed only in the processing chips 114 and 124 illustrated in the sub-figure (b) of FIG. 1. For example, a technical feature in which the transmitting STA transmits a control signal may be understood as a technical feature in which a control signal generated in the processors 111 and 121 illustrated in the sub-figure (a)/(b) of FIG. 1 is transmitted through the transceivers 113 and 123 illustrated in the sub-figure (a)/(b) of FIG. 1. Alternatively, the technical feature in which the transmitting STA transmits the control signal may be understood as a technical feature in which the control signal to be transferred to the transceivers 113 and 123 is generated in the processing chips 114 and 124 illustrated in the sub-figure (b) of FIG. 1.

For example, a technical feature in which the receiving STA receives the control signal may be understood as a technical feature in which the control signal is received by means of the transceivers 113 and 123 illustrated in the sub-figure (a) of FIG. 1. Alternatively, the technical feature in which the receiving STA receives the control signal may be understood as the technical feature in which the control signal received in the transceivers 113 and 123 illustrated in the sub-figure (a) of FIG. 1 is obtained by the processors 111 and 121 illustrated in the sub-figure (a) of FIG. 1. Alternatively, the technical feature in which the receiving STA receives the control signal may be understood as the technical feature in which the control signal received in the transceivers 113 and 123 illustrated in the sub-figure (b) of FIG. 1 is obtained by the processing chips 114 and 124 illustrated in the sub-figure (b) of FIG. 1.

Referring to the sub-figure (b) of FIG. 1, software codes 115 and 125 may be included in the memories 112 and 122. The software codes 115 and 126 may include instructions for controlling an operation of the processors 111 and 121. The software codes 115 and 125 may be included as various programming languages.

The processors 111 and 121 or processing chips 114 and 124 of FIG. 1 may include an application-specific integrated circuit (ASIC), other chipsets, a logic circuit and/or a data processing device. The processor may be an application processor (AP). For example, the processors 111 and 121 or processing chips 114 and 124 of FIG. 1 may include at least one of a digital signal processor (DSP), a central processing unit (CPU), a graphics processing unit (GPU), and a modulator and demodulator (modem). For example, the processors 111 and 121 or processing chips 114 and 124 of FIG. 1 may be SNAPDRAGONTM series of processors made by Qualcomm^{®}, EXYNOSTM series of processors made by Samsung^{®}, A series of processors made by Apple^{®}, HELIOTM series of processors made by MediaTek^{®}, ATOMTM series of processors made by Intel^{®} or processors enhanced from these processors.

In the present disclosure, an uplink may imply a link for communication from a non-AP STA to an AP STA, and an uplink PPDU/packet/signal or the like may be transmitted through the uplink. In addition, in the present disclosure, a downlink may imply a link for communication from the AP STA to the non-AP STA, and a downlink PPDU/packet/signal or the like may be transmitted through the downlink.

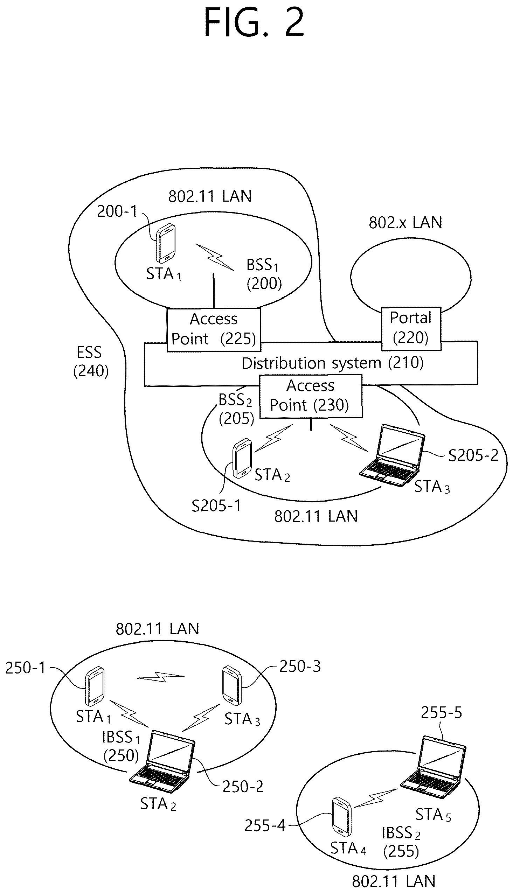

FIG. 2 is a conceptual view illustrating the structure of a wireless local area network (WLAN).

An upper part of FIG. 2 illustrates the structure of an infrastructure basic service set (BSS) of institute of electrical and electronic engineers (IEEE) 802.11.

An upper part of FIG. 2 illustrates the structure of an infrastructure basic service set (BSS) of institute of electrical and electronic engineers (IEEE) 802.11.

Referring the upper part of FIG. 2, the wireless LAN system may include one or more infrastructure BSSs 200 and 205 (hereinafter, referred to as BSS). The BSSs 200 and 205 as a set of an AP and an STA such as an access point (AP) 225 and a station (STA1) 200-1 which are successfully synchronized to communicate with each other are not concepts indicating a specific region. The BSS 205 may include one or more STAs 205-1 and 205-2 which may be joined to one AP 230.

The BSS may include at least one STA, an AP 225, 230 providing a distribution service, and a distribution system (DS) 210 connecting multiple APs.

The distribution system 210 may implement an extended service set (ESS) 240 extended by connecting the multiple BSSs 200 and 205. The ESS 240 may be used as a term indicating one network configured by connecting one or more APs 225 or 230 through the distribution system 210. The AP included in one ESS 240 may have the same service set identification (SSID).

A portal 220 may serve as a bridge which connects the wireless LAN network (IEEE 802.11) and another network (e.g., 802.X).

In the BSS illustrated in the upper part of FIG. 2, a network between the APs 225 and 230 and a network between the APs 225 and 230 and the STAs 200-1, 205-1, and 205-2 may be implemented. However, the network is configured even between the STAs without the APs 225 and 230 to perform communication. A network in which the communication is performed by configuring the network even between the STAs without the APs 225 and 230 is defined as an Ad-Hoc network or an independent basic service set (IBSS).

A lower part of FIG. 2 illustrates a conceptual view illustrating the IBSS.

Referring to the lower part of FIG. 2, the IBSS is a BSS that operates in an Ad-Hoc mode. Since the IBSS does not include the access point (AP), a centralized management entity that performs a management function at the center does not exist. That is, in the IBSS, STAs 250-1, 250-2, 250-3, 255-4, and 255-5 are managed by a distributed manner. In the IBSS, all STAs 250-1, 250-2, 250-3, 255-4, and 255-5 may be constituted by movable STAs and are not permitted to access the DS to constitute a self-contained network.

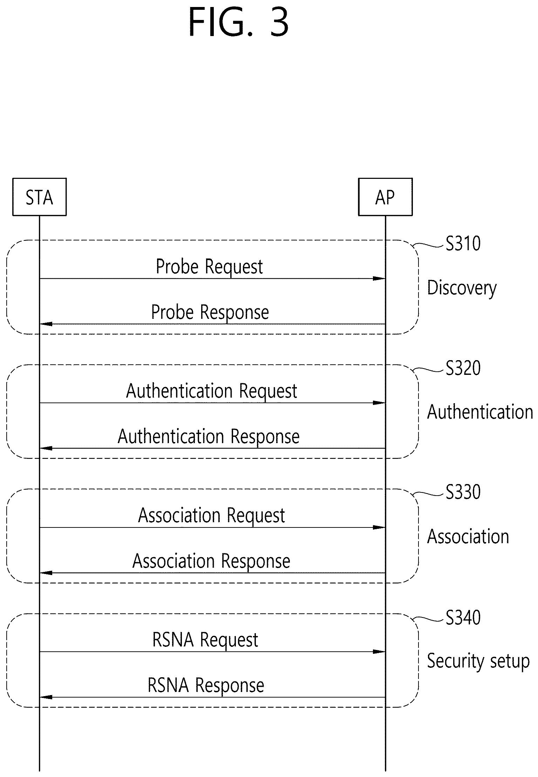

FIG. 3 illustrates a general link setup process.

In S310, a STA may perform a network discovery operation. The network discovery operation may include a scanning operation of the STA. That is, to access a network, the STA needs to discover a participating network. The STA needs to identify a compatible network before participating in a wireless network, and a process of identifying a network present in a particular area is referred to as scanning. Scanning methods include active scanning and passive scanning.

FIG. 3 illustrates a network discovery operation including an active scanning process. In active scanning, a STA performing scanning transmits a probe request frame and waits for a response to the probe request frame in order to identify which AP is present around while moving to channels. A responder transmits a probe response frame as a response to the probe request frame to the STA having transmitted the probe request frame. Here, the responder may be a STA that transmits the last beacon frame in a BSS of a channel being scanned. In the BSS, since an AP transmits a beacon frame, the AP is the responder. In an IBSS, since STAs in the IBSS transmit a beacon frame in turns, the responder is not fixed. For example, when the STA transmits a probe request frame via channel 1 and receives a probe response frame via channel 1, the STA may store BSS-related information included in the received probe response frame, may move to the next channel (e.g., channel 2), and may perform scanning (e.g., transmits a probe request and receives a probe response via channel 2) by the same method.

Although not shown in FIG. 3, scanning may be performed by a passive scanning method. In passive scanning, a STA performing scanning may wait for a beacon frame while moving to channels. A beacon frame is one of management frames in IEEE 802.11 and is periodically transmitted to indicate the presence of a wireless network and to enable the STA performing scanning to find the wireless network and to participate in the wireless network. In a BSS, an AP serves to periodically transmit a beacon frame. In an IBSS, STAs in the IBSS transmit a beacon frame in turns. Upon receiving the beacon frame, the STA performing scanning stores information about a BSS included in the beacon frame and records beacon frame information in each channel while moving to another channel. The STA having received the beacon frame may store BSS-related information included in the received beacon frame, may move to the next channel, and may perform scanning in the next channel by the same method.

After discovering the network, the STA may perform an authentication process in S320. The authentication process may be referred to as a first authentication process to be clearly distinguished from the following security setup operation in S340. The authentication process in S320 may include a process in which the STA transmits an authentication request frame to the AP and the AP transmits an authentication response frame to the STA in response. The authentication frames used for an authentication request/response are management frames.

The authentication frames may include information about an authentication algorithm number, an authentication transaction sequence number, a status code, a challenge text, a robust security network (RSN), and a finite cyclic group.

The STA may transmit the authentication request frame to the AP. The AP may determine whether to allow the authentication of the STA based on the information included in the received authentication request frame. The AP may provide the authentication processing result to the STA via the authentication response frame.

When the STA is successfully authenticated, the STA may perform an association process in S330. The association process includes a process in which the STA transmits an association request frame to the AP and the AP transmits an association response frame to the STA in response. The association request frame may include, for example, information about various capabilities, a beacon listen interval, a service set identifier (SSID), a supported rate, a supported channel, RSN, a mobility domain, a supported operating class, a traffic indication map (TIM) broadcast request, and an interworking service capability. The association response frame may include, for example, information about various capabilities, a status code, an association ID (AID), a supported rate, an enhanced distributed channel access (EDCA) parameter set, a received channel power indicator (RCPI), a received signal-to-noise indicator (RSNI), a mobility domain, a timeout interval (association comeback time), an overlapping BSS scanning parameter, a TIM broadcast response, and a QoS map.

In S340, the STA may perform a security setup process. The security setup process in S340 may include a process of setting up a private key through four-way handshaking, for example, through an extensible authentication protocol over LAN (EAPOL) frame.

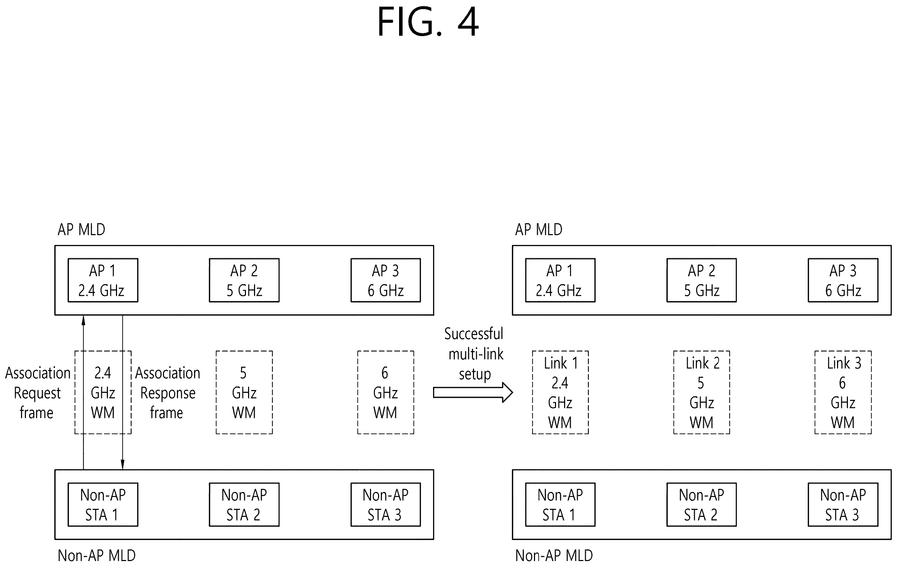

FIG. 4 shows an example of a multi-link (ML).

As illustrated in FIG. 4, multiple multi-link devices (MLDs) can perform communication via a remote link. The MLD can be classified into an AP MLD including multiple AP STAs and a non-AP MLD including multiple non-AP STAs. That is, the AP MLD can include affiliated APs (i.e., AP STAs), and the non-AP MLD can include affiliated STAs (i.e., non-AP STAs, or user-STAs).

The multi-link can include a first link and a second link, and different channels/subchannels/frequency resources can be allocated to the first and second links. The first and second multi-links can be identified through a link ID of 4 bits (or other n bits). The first and second links may be configured in the same 2.4 GHz, 5 GHz, or 6 GHz band. Alternatively, the first link and the second link may be configured in different bands.

The AP MLD of FIG. 4 includes three affiliated APs. In the example of FIG. 4, AP1 may operate in the 2.4 GHz band, AP2 may operate in the 5 GHz band, and AP3 may operate in the 6 GHz band. In the example of FIG. 4, the first link in which AP1 and non-AP1 operate may be defined as a channel/subchannel/frequency resource within the 2.4 GHz band. In addition, in the example of FIG. 4, the second link in which AP2 and non-AP2 operate may be defined as a channel/subchannel/frequency resource within the 5 GHz band. In addition, in the example of FIG. 4, the third link where AP3 and non-AP3 operate can be defined as a channel/subchannel/frequency resource within the 6 GHz band.

In the example of FIG. 4, AP1 can start a multi-link setup procedure (ML setup procedure) by transmitting an association request frame to non-AP STA1. In the example of FIG. 4, non-AP STA1 can transmit an association response frame in response to the association request frame. Each AP (e.g., AP1/2/3) illustrated in FIG. 4 may be identical to the AP illustrated in FIG. 1 and/or FIG. 2, and each non-AP (e.g., non-AP1/2/3) illustrated in FIG. 4 may be identical to the STA (i.e., user-STA or non-AP STA) illustrated in FIG. 1 and/or FIG. 2.

The specific features of the present disclosure are not limited to the specific features of FIG. 4. That is, the number of links can be defined in various ways, and multiple links can be defined in various ways within at least one band.

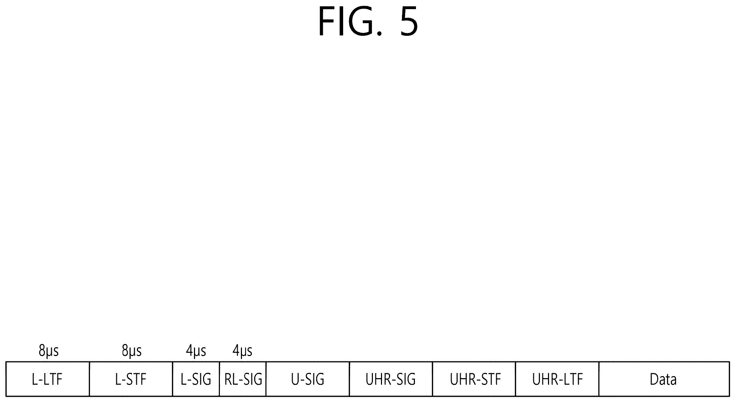

FIG. 5 shows an example of a physical protocol data unit or physical layer (PHY) protocol data unit (PPDU) transmitted/received by an STA of the present disclosure.

An STA (e.g., an AP STA, a non-AP STA, an AP MLD, a non-AP MLD) of the present disclosure can transmit and/or receive a PPDU of FIG. 5. The PPDU described in the present disclosure can have, for example, a structure of FIG. 5. In addition, the PPDU described in the present disclosure can be called by various names such as a transmission PPDU, a reception PPDU, a first type or an N^{th} type PPDU, etc. The PPDU described in the present disclosure can be used in a WLAN system defined according to IEEE 802.11bn and/or a next-generation WLAN system that improves IEEE 802.11bn.

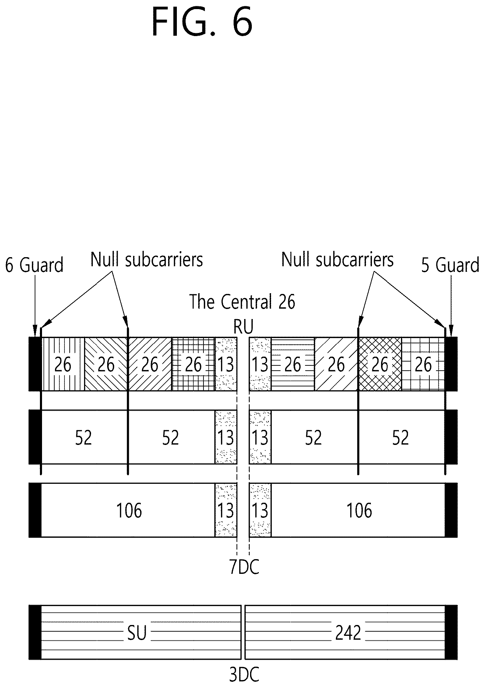

The PPDU of FIG. 5 can be related to various PPDU types used in a UHR system. For example, the example of FIG. 5 can be used for at least one of single-user (SU) mode/type/transmission, multi-user (MU) mode/type/transmission, and null-data packet (NDP) mode/type/transmission related to channel sounding. For example, if the example of FIG. 5 is related to NDP, the data field illustrated can be omitted. If the PPDU of FIG. 5 is used for trigger-based (TB) mode, UHR-SIG of FIG. 6 can be omitted. In other words, an STA that has received a trigger frame for uplink-MU (UL-MU) communication can transmit a PPDU with UHR-SIG omitted in the example of FIG. 5.

In FIG. 5, L-STF or UHR-LTF may be called a preamble or a physical preamble, and may be generated/transmitted/received/acquired/decoded in the physical layer (included in the transmitting/receiving STA).

Each block illustrated in FIG. 5 may be called a field/subfield/signal, etc. The names of these fields/subfields/signals may be legacy short training field (L-STF), legacy long training field (L-LTF), legacy signal (L-SIG), repeated L-SIG (RL-SIG), universal signal (U-SIG), UHR-signal (UHR-SIG), etc., as illustrated in FIG. 5.

A subcarrier spacing of the L-STF, L-LTF, L-SIG, RL-SIG, U-SIG, and UHR-SIG fields of FIG. 5 may be determined as 312.5 kHz, and a subcarrier spacing of the UHR-STF, UHR-LTF, and Data fields may be determined as 78.125 kHz. That is, a tone index (or subcarrier index) of the L-STF, L-LTF, L-SIG, RL-SIG, U-SIG, and UHR -SIG fields may be expressed in unit of 312.5 kHz, and a tone index (or subcarrier index) of the UHR-STF, UHR-LTF, and Data fields may be expressed in unit of 78.125 kHz.

In the PPDU of FIG. 5, the L-LTF and the L-STF may be the same as those in the conventional fields (for example, non-HT LTF and non-HT STF defined in conventional WLAN standards).

The L-SIG field of FIG. 5 may include, for example, bit information of 24 bits. For example, the 24-bit information may include a rate field of 4 bits, a reserved bit of 1 bit, a length field of 12 bits, a parity bit of 1 bit, and a tail bit of 6 bits. For example, the length field of 12 bits may include information related to a length or time duration of a PPDU. For example, the length field of 12 bits may be determined based on a type of the PPDU. For example, when the PPDU is a non-high throughput (HT), high throughput (HT), very high throughput (VHT) PPDU, extremely high throughput (EHT) PPDU or UHR PPDU, a value of the length field may be determined as a multiple of 3. For example, when the PPDU is an HE PPDU, the value of the length field may be determined as "a multiple of 3"+1 or "a multiple of 3"+2. In other words, for the non-HT, HT, VHT PPDI, EHT PPDU or the UHR PPDU, the value of the length field may be determined as a multiple of 3, and for the high efficiency (HE) PPDU, the value of the length field may be determined as "a multiple of 3"+1 or "a multiple of 3"+2. In other words, the LENGTH field in an UHR PPDU is set to a value satisfying the condition that the remainder is zero when LENGTH is divided by 3

For example, the (non-AP and AP) STA may apply BCC encoding based on a 1/2 coding rate to the 24-bit information of the L-SIG field. Thereafter, the transmitting STA may obtain a BCC coding bit of 48 bits. BPSK modulation may be applied to the 48-bit coding bit, thereby generating 48 BPSK symbols. The transmitting STA may map the 48 BPSK symbols to positions except for a pilot subcarrier{ subcarrier index -21, -7, +7, +21} and a DC subcarrier{subcarrier index 0}. As a result, the 48 BPSK symbols may be mapped to subcarrier indices -26 to -22, -20 to -8, -6 to -1, +1 to +6, +8 to +20, and +22 to +26. The transmitting STA may additionally map a signal of {-1, -1, -1, 1} to a subcarrier index {-28, -27, +27, +28}. The aforementioned signal may be used for channel estimation in the frequency domain corresponding to {-28, -27, +27, +28}.

For example, the (non-AP and AP) STA may generate an RL-SIG generated in the same manner as the L-SIG. BPSK modulation may be applied to the RL-SIG. The (non-AP and AP) STA may know that the RX PPDU is the HE PPDU, EHT PPDU, or the UHR PPDU, based on the presence of the RL-SIG. In other words, a receiving (non-AP and AP) STA can know that a received PPDU is one of a HE PPDU, an EHT PPDU, and a UHR PPDU if RL-SIG is present. In other words, a receiving (non-AP and AP) STA can know that a received PPDU is one of a non-HT PPDU, an HT PPDU, and a VHT PPDU if RL-SIG is not present. In other words, the RL-SIG field is a repeat of the L-SIG field and is used to differentiate a UHR PPDU from a non-HT PPDU, HT PPDU, and VHT PPDU.

A universal SIG (U-SIG) may be inserted after the RL-SIG of FIG. 6. The U-SIG may be called in various terms such as a first SIG field, a first SIG, a first type SIG, a control signal, a control signal field, a first (type) control signal, common control field, common control signal, or the like.

The U-SIG may include information of N bits, and may include information for identifying a type of the EHT PPDU. For example, the U-SIG may be configured based on two symbols (e.g., two contiguous OFDM symbols). Each symbol (e.g., OFDM symbol) for the U-SIG may have a duration of 4us. Each symbol of the U-SIG may be used to transmit the 26-bit information. For example, each symbol of the U-SIG may be transmitted/received based on 52 data tomes and 4 pilot tones.

Through the U-SIG for example, A-bit information (e.g., 52 un-coded bits) may be transmitted. A first symbol of the U-SIG may transmit first X-bit information (e.g., 26 un-coded bits) of the A-bit information, and a second symbol of the U-SIG may transmit the remaining Y-bit information (e.g. 26 un-coded bits) of the A-bit information. For example, the transmitting STA may obtain 26 un-coded bits included in each U-SIG symbol. The transmitting STA may perform convolutional encoding (i.e., BCC encoding) based on a rate of R=1/2 to generate 52-coded bits, and may perform interleaving on the 52-coded bits. The transmitting STA may perform BPSK modulation on the interleaved 52-coded bits to generate 52 BPSK symbols to be allocated to each U-SIG symbol. One U-SIG symbol may be transmitted based on 65 tones (subcarriers) from a subcarrier index -28 to a subcarrier index +28, except for a DC index 0. The 52 BPSK symbols generated by the transmitting STA may be transmitted based on the remaining tones (subcarriers) except for pilot tones, i.e., tones -21, -7, +7, +21.

For example, the A-bit information (e.g., 52 un-coded bits) generated by the U-SIG may include a CRC field (e.g., a field having a length of 4 bits) and a tail field (e.g., a field having a length of 6 bits). The CRC field and the tail field may be transmitted through the second symbol of the U-SIG. The CRC field may be generated based on 26 bits allocated to the first symbol of the U-SIG and the remaining 16 bits except for the CRC/tail fields in the second symbol, and may be generated based on the conventional CRC calculation algorithm. In addition, the tail field may be used to terminate trellis of a convolutional decoder, and may be set to, for example, '000000'.

The A-bit information (e.g., 52 un-coded bits) transmitted by the U-SIG (or U-SIG field) may be divided into version-independent bits and version-dependent bits. For example, the version-independent bits may have a fixed or variable size. For example, the version-independent bits may be allocated only to the first symbol of the U-SIG, or the version-independent bits may be allocated to both of the first and second symbols of the U-SIG. For example, the version-independent bits and the version-dependent bits may be called in various terms such as a first control bit, a second control bit, or the like.

For example, the version-independent bits of the U-SIG may include a PHY version identifier of 3 bits. For example, the PHY version identifier of 3 bits may include information related to a PHY version of a TX/RX PPDU. For example, a first value of the PHY version identifier of 3 bits (for example, 000 value) may indicate that the TX/RX PPDU is an EHT PPDU. Also, a second value of the PHY version identifier of 3 bits (for example, 001 value) may indicate that the TX/RX PPDU is a UHR PPDU.

In other words, when the (AP/non-AP) STA transmits an EHT PPDU, the 3-bit PHY version identifier can be set to the first value, and when the (AP/non-AP) STA transmits a UHR PPDU, the 3-bit PHY version identifier can be set to the second value. In other words, the receiving (AP/non-AP) STA can determine that the received PPDU is an EHT PPDU based on the PHY version identifier having the first value, and can determine that the received PPDU is a UHR PPDU based on the PHY version identifier having the second value.

For example, the version-independent bits of the U-SIG may include a UL/DL flag field of 1 bit. A first value of the UL/DL flag field of 1 bit relates to UL communication, and a second value of the UL/DL flag field relates to DL communication.

For example, the version-independent bits of the U-SIG may include information related to a transmission opportunity (TXOP) length and information related to a BSS color ID.

For example, if a UHR PPDU is classified into various types (e.g., type related to SU transmission (performed based on UL or DL), type related to DL transmission, type related to NDP transmission, type related to DL non-MU-MIMO, type related to DL MU-MIMO, type related to multi-AP operation, type related to coordinated beamforming (Co-BF), spatial reuse (SR), type related to coordinated OFDMA (C-OFDMA), type related to coordinated TDMA (Co-TDMA)), information about the type of the UHR PPDU (e.g., 2-bit or 3-bit information) can be included in the version-dependent bits of the U-SIG.

For example, the U-SIG may include: 1) a bandwidth field including information related to a bandwidth; 2) a field including information related to an modulation and coding scheme (MCS) applied to UHR-SIG; 3) an indication field including information regarding whether a dual subcarrier modulation (DCM) scheme is applied to UHR-SIG; 4) a field including information related to the number of symbol used for UHR-SIG; 5) a field including information regarding whether the UHR-SIG is generated across a full band; 6) a field including information related to a type of UHR-LTF/STF; and 7) information related to a field indicating an UHR-LTF length and a CP length.

Preamble puncturing may be applied to the PPDU of FIG. 5. The preamble puncturing implies that puncturing is applied to part (e.g., a secondary 20 MHz band) of the full band. For example, when an 80 MHz PPDU is transmitted, an STA may apply puncturing to the secondary 20 MHz band out of the 80 MHz band, and may transmit a PPDU only through a primary 20 MHz band and a secondary 40 MHz band.

For example, a pattern of the preamble puncturing may be configured in advance. For example, when a first puncturing pattern is applied, puncturing may be applied only to the secondary 20 MHz band within the 80 MHz band. For example, when a second puncturing pattern is applied, puncturing may be applied to only any one of two secondary 20 MHz bands included in the secondary 40 MHz band within the 80 MHz band. For example, when a third puncturing pattern is applied, puncturing may be applied to only the secondary 20 MHz band included in the primary 80 MHz band within the 160 MHz band (or 80+80 MHz band). For example, when a fourth puncturing is applied, puncturing may be applied to at least one 20 MHz channel not belonging to a primary 40 MHz band in the presence of the primary 40 MHz band included in the 80MHaz band within the 160 MHz band (or 80+80 MHz band).

Information related to the preamble puncturing applied to the PPDU may be included in U-SIG and/or UHR-SIG. For example, a first field of the U-SIG may include information related to a contiguous bandwidth, and second field of the U-SIG may include information related to the preamble puncturing applied to the PPDU.

For example, the U-SIG and the UHR-SIG may include the information related to the preamble puncturing, based on the following method. When a bandwidth of the PPDU exceeds 80 MHz, the U-SIG may be configured individually in unit of 80 MHz. For example, when the bandwidth of the PPDU is 160 MHz, the PPDU may include a first U-SIG for a first 80 MHz band and a second U-SIG for a second 80 MHz band. In this case, a first field of the first U-SIG may include information related to a 160 MHz bandwidth, and a second field of the first U-SIG may include information related to a preamble puncturing (i.e., information related to a preamble puncturing pattern) applied to the first 80 MHz band. In addition, a first field of the second U-SIG may include information related to a 160 MHz bandwidth, and a second field of the second U-SIG may include information related to a preamble puncturing (i.e., information related to a preamble puncturing pattern) applied to the second 80 MHz band. Meanwhile, an UHR-SIG contiguous to the first U-SIG may include information related to a preamble puncturing applied to the second 80 MHz band (i.e., information related to a preamble puncturing pattern), and an UHR-SIG contiguous to the second U-SIG may include information related to a preamble puncturing (i.e., information related to a preamble puncturing pattern) applied to the first 80 MHz band.

Additionally or alternatively, the U-SIG and the UHR-SIG may include the information related to the preamble puncturing, based on the following method. The U-SIG may include information related to a preamble puncturing (i.e., information related to a preamble puncturing pattern) for all bands. That is, the UHR-SIG may not include the information related to the preamble puncturing, and only the U-SIG may include the information related to the preamble puncturing (i.e., the information related to the preamble puncturing pattern).

The U-SIG may be configured in unit of 20 MHz. For example, when an 80 MHz PPDU is configured, the U-SIG may be duplicated. That is, four identical U-SIGs may be included in the 80 MHz PPDU. PPDUs exceeding an 80 MHz bandwidth may include different U-SIGs.

The UHR-SIG of FIG. 5 may include control information for the receiving STA. The UHR-SIG may be transmitted through at least one symbol, and one symbol may have a length of 4us. Information related to the number of symbols used for the UHR-SIG may be included in the U-SIG.

UHR-SIG provides an additional signal to the U-SIG field to enable STA to interpret/decode UHR PPDU. UHR-SIG field may include U-SIG overflow bits that are commonly applied to all users. In addition, UHR-SIG field includes resource allocation information, so that STA can look-up resources used in fields including data field/UHR-STF/UHR-LTF (i.e., UHR modulated fields of a UHR PPDU).

Frequency resources of UHR-LTF, UHR-STF, and data fields illustrated in FIG. 5 may be determined based on RUs (resource units) defined by multiple subcarriers/tones. That is, UHR-LTF, UHR-STF, and data fields of the present disclosure may be transmitted/received through RUs (resource units) defined by multiple subcarriers/tones.

FIG. 6 is a diagram illustrating the layout of resource units (RUs) used for a 20 MHz PPDU. That is, the UHR-LTF, UHR-STF, and/or data fields included in the 20 MHz PPDU may be transmitted/received through at least one of the various RUs defined in FIG. 6.

As illustrated in the uppermost part of FIG. 6, a 26-unit (i.e., a unit corresponding to 26 tones) may be disposed. Six tones may be used for a guard band in the leftmost band of the 20 MHz band, and five tones may be used for a guard band in the rightmost band of the 20 MHz band. Further, seven DC tones may be inserted in a center band, that is, a DC band, and a 26-unit corresponding to 13 tones on each of the left and right sides of the DC band may be disposed. A 26-unit, a 52-unit, and a 106-unit may be allocated to other bands. Each unit may be allocated for a receiving STA, that is, a user.

Meanwhile, the layout of the RUs in FIG. 6 may be used not only for a multiple users (MUs) but also for a single user (SU), in which case one 242-unit may be used and three DC tones may be inserted as illustrated in the lowermost part of FIG. 6.

Although FIG. 6 proposes RUs having various sizes, that is, a 26-RU, a 52-RU, a 106-RU, and a 242-RU, specific sizes of RUs may be extended or increased. Therefore, the present embodiment is not limited to the specific size of each RU (i.e., the number of corresponding tones). In this specification, N-RU may be represented as N-tone RU, etc. For example, 26-RU may be represented as 26-tone RU.

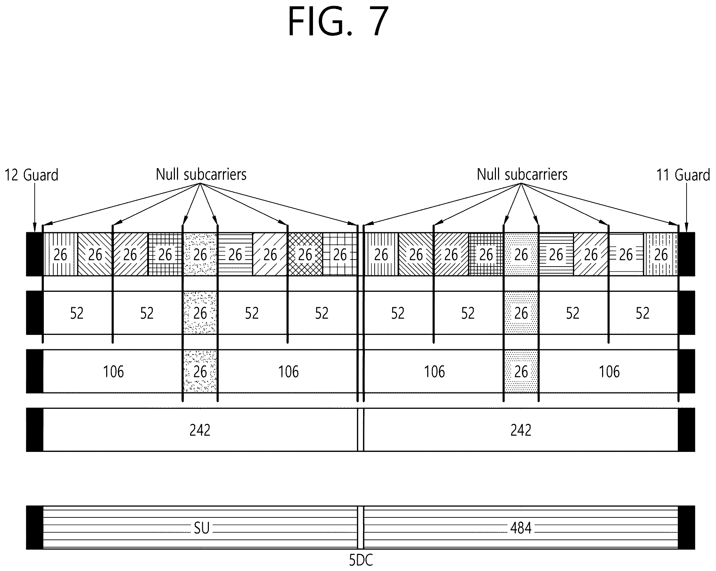

FIG. 7 is a diagram illustrating the layout of resource units (RUs) used for 40MHz PPDU.

Similarly to FIG. 6 in which RUs having various sizes are used, a 26-RU, a 52-RU, a 106-RU, a 242-RU, a 484-RU, and the like may be used in an example of FIG. 7. Further, five DC tones may be inserted in a center frequency, 12 tones may be used for a guard band in the leftmost band of the 40 MHz band, and 11 tones may be used for a guard band in the rightmost band of the 40 MHz band.

As illustrated in FIG. 7, when the layout of the RUs is used for a single user, a 484-RU may be used. The specific number of RUs may be changed similarly to FIG. 6.

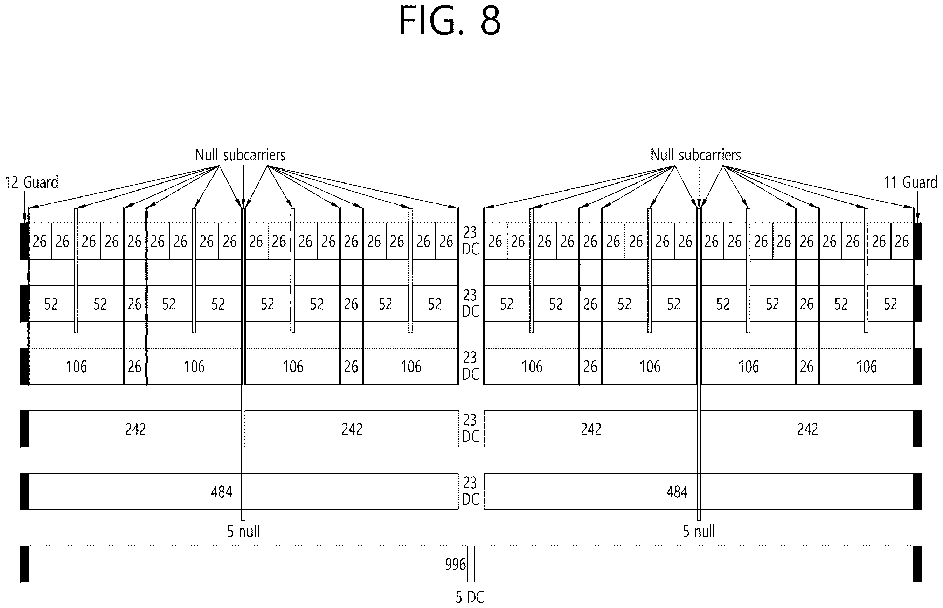

FIG. 8 is a diagram illustrating the layout of resource units (RUs) used for an 80MHz PPDU. The layout of resource units (RUs) used in this specification may vary. For example, the layout of resource units (RUs) used in the 80MHz band may vary.

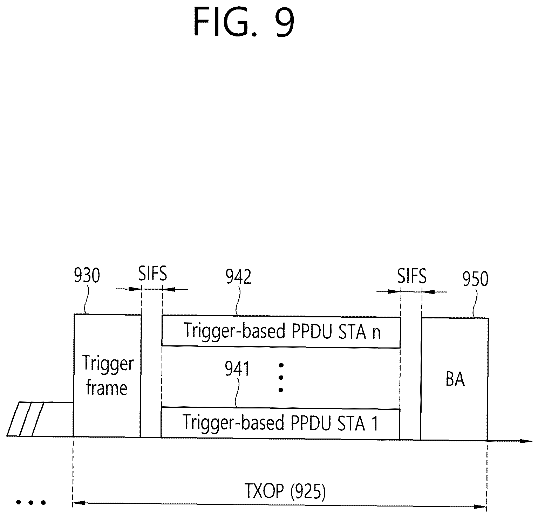

FIG. 9 shows an operation related to UL-MU. As illustrated, a transmitting STA (e.g., AP) can perform channel access through contending (i.e., backoff operation) and transmit a trigger frame (930). That is, the transmitting STA (e.g., AP) can transmit a PPDU including a trigger frame (930). When a PPDU including a trigger frame is received, a TB (trigger-based) PPDU is transmitted after a delay of SIFS.

TB PPDUs (941, 942) are transmitted at the same time and can be transmitted from multiple STAs (e.g., User STAs) whose AIDs are indicated in the Trigger frame (930). The ACK frame (950) for the TB PPDU can be implemented in various forms.

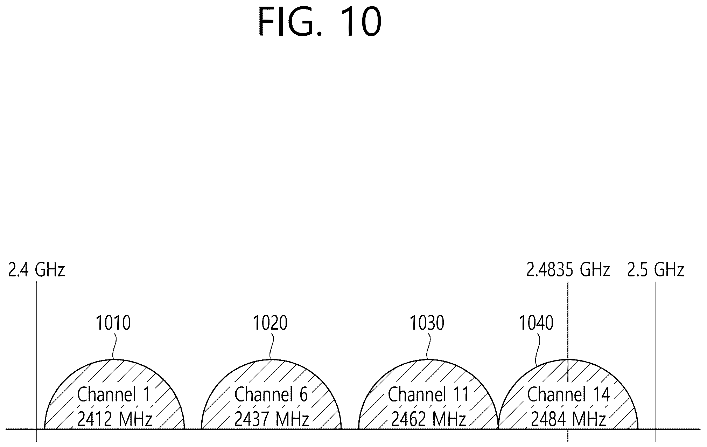

FIG. 10 illustrates an example of channels used/supported/defined within the 2.4 GHz band.

The 2.4 GHz band may also be referred to by other names, such as "first band." Furthermore, the 2.4 GHz band may refer to a frequency range in which channels with center frequencies adjacent to 2.4 GHz (e.g., channels with center frequencies between 2.4 and 2.5 GHz) are used/supported/defined.

The 2.4 GHz band may include multiple 20 MHz channels. The 20 MHz within the 2.4 GHz band may have multiple channel indices (e.g., indices 1 through 14). For example, the center frequency of a 20 MHz channel assigned channel index 1 may be 2.412 GHz, the center frequency of a 20 MHz channel assigned channel index 2 may be 2.417 GHz, and the center frequency of a 20 MHz channel assigned channel index N may be (2.407 + 0.005*N) GHz. The channel indices may be referred to by various names, such as channel numbers. The specific numerical values of the channel indices and center frequencies may change.

FIG. 10 exemplarily illustrates four channels within the 2.4 GHz band. The illustrated first frequency region (1010) to fourth frequency region (1040) may each include one channel. For example, the first frequency region (1010) may include channel 1 (a 20 MHz channel having an index of 1). In this case, the center frequency of channel 1 may be set to 2412 MHz. The second frequency region (1020) may include channel 6. In this case, the center frequency of channel 6 may be set to 2437 MHz. The third frequency region (1030) may include channel 11. In this case, the center frequency of channel 11 may be set to 2462 MHz. The fourth frequency region (1040) may include channel 14. In this case, the center frequency of channel 14 may be set to 2484 MHz.

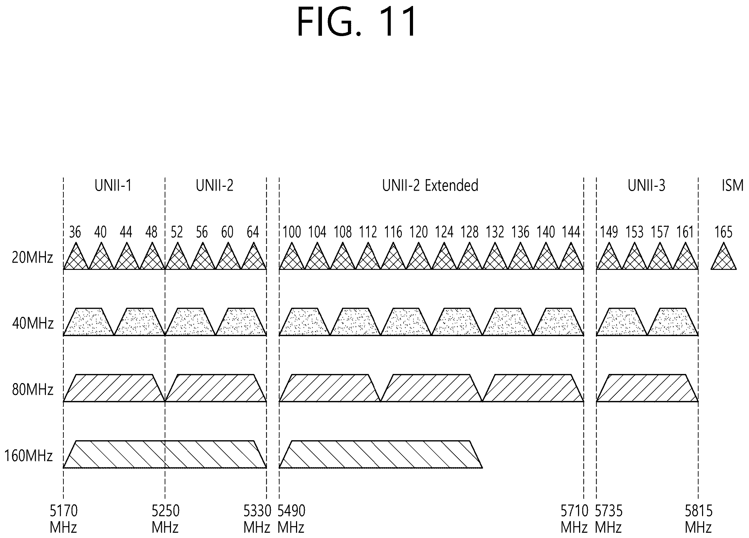

FIG. 11 illustrates an example of channels used/supported/defined within the 5 GHz band.

The 5 GHz band may be referred to by other names, such as a second band/band, etc. The 5 GHz band may refer to a frequency range in which channels with center frequencies greater than or equal to 5 GHz and less than 6 GHz (or less than 5.9 GHz) are used/supported/defined. Alternatively, the 5 GHz band may include multiple channels between 4.5 GHz and 5.5 GHz. The specific figures shown in FIG. 11 are subject to change.

Multiple channels within the 5 GHz band include Unlicensed National Information Infrastructure (UNII)-1, UNII-2, UNII-3, and ISM. UNII-1 may be referred to as UNII Low. UNII-2 may include frequency ranges called UNII Mid and UNII-2Extended. UNII-3 may be referred to as UNII-Upper.

Within the 5 GHz band, multiple channels can be configured, and the bandwidth of each channel can be variously configured, such as 20 MHz, 40 MHz, 80 MHz, or 160 MHz. For example, the 5170 MHz to 5330 MHz frequency domain/range within UNII-1 and UNII-2 can be divided into eight 20 MHz channels. The 5170 MHz to 5330 MHz frequency domain/range can be divided into four channels through a 40 MHz frequency domain. The 5170 MHz to 5330 MHz frequency domain/range can be divided into two channels through an 80 MHz frequency domain. Alternatively, the 5170 MHz to 5330 MHz frequency domain/range can be divided into one channel through a 160 MHz frequency domain.

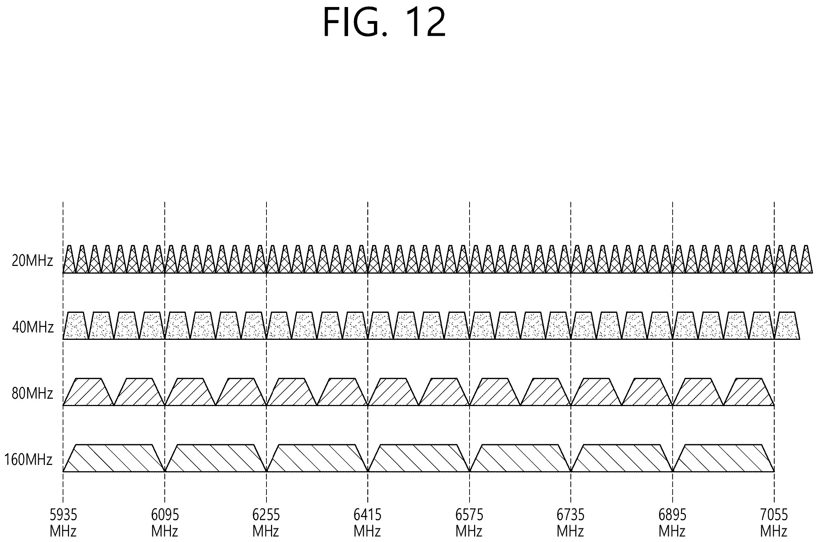

FIG. 12 illustrates an example of channels used/supported/defined within the 6 GHz band.

The 6 GHz band may be referred to by other names, such as the third band/band. The 6 GHz band may refer to a frequency range where channels with center frequencies higher than 5.9 GHz are used, supported, and defined. The specific values shown in FIG. 12 are subject to change.

For example, the 20 MHz channel in FIG. 12 may be defined starting from 5.940 GHz. Specifically, the leftmost channel among the 20 MHz channels in FIG. 12 may have an index of 1 (or channel index, channel number, etc.) and be assigned a center frequency of 5.945 GHz. In other words, the center frequency of channel index N may be determined as (5.940 + 0.005*N) GHz.

Accordingly, the indexes (or channel numbers) of the 20 MHz channels of FIG. 12 may be 1, 5, 9, 13, 17, 21, 25, 29, 33, 37, 41, 45, 49, 53, 57, 61, 65, 69, 73, 77, 81, 85, 89, 93, 97, 101, 105, 109, 113, 117, 121, 125, 129, 133, 137, 141, 145, 149, 153, 157, 161, 165, 169, 173, 177, 181, 185, 189, 193, 197, 201, 205, 209, 213, 217, 221, 225, 229, 233. Also, according to the (5.940 + 0.005*N) GHz rule mentioned above, the indexes of the 40 MHz channels in FIG. 12 may be 3, 11, 19, 27, 35, 43, 51, 59, 67, 75, 83, 91, 99, 107, 115, 123, 131, 139, 147, 155, 163, 171, 179, 187, 195, 203, 211, 219, 227.

Hereinafter, the structure and type/subtype of MAC frame are described.

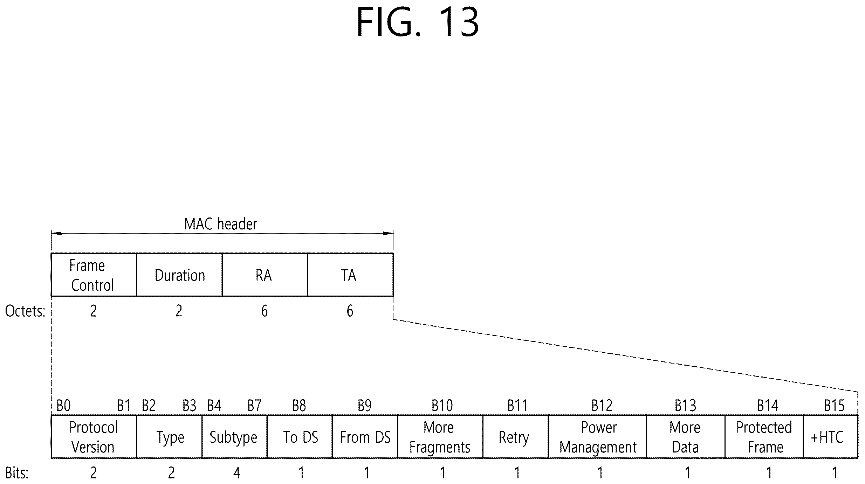

FIG. 13 shows an example of a header of a MAC frame. As shown, the MAC frame can include a frame control field/information of 2 octets in length, a duration field/information of 2 octets in length, an receiver address (RA) field/information of 6 octets in length, and a transmitter address (TA) field/information of 6 octets in length. As shown in FIG. 13, the four fields can be consecutive to each other. The MAC header of FIG. 13 can be modified in various ways, and a new field can be inserted between the four fields shown, or at least one of the fields shown can be omitted.

The MAC header shown in FIG. 13 can be located at the very front of the MAC frame. That is, the MAC frame may include a MAC header as in FIG. 13 and a MAC body field/information that is continuous to the MAC header. The MAC frame including the MAC header of FIG. 13 is inserted/included in the data field of the PPDU (e.g., UHR PPDU) illustrated in FIG. 5.

The MAC frame included in the data field of the PPDU of this disclosure may be classified into various types. For example, the MAC frame of this disclosure may be classified into a control frame, a management frame, and a data frame.

For example, the management frame includes association request, association response, reassociation request, reassociation response, probe request, probe response, beacon, disassociation, authentication, and deauthentication frames/signals defined in the conventional WLAN. For the management frame, the values of the type fields (B3 and B2) of FIG. 8 are set to 00. Also, the values of the subtype fields (B7, B6, B5, B4) of FIG. 8 are as follows: association request (0000), association response

(0001), reassociation request (0010), reassociation response (0011), probe request (0100), probe response (0101), beacon (1000), disassociation (1010), authentication (1011), deauthentication (1100).

For example, the control frame includes trigger beamforming report poll, NDP announcement (NDPA), control frame extension, control wrapper, block Ack request (BlockAckReq), Block Ack (BlockAck), PS-Poll, RTS, CTS, Ack, CF-end frames/signals defined in conventional WLAN. For the control frame, the values of the type fields (B3 and B2) of FIG. 8 are set to 01. Also, the values of the subtype fields (B7, B6, B5, B4) of FIG. 8 are as follows: trigger (0010), beamforming report poll (0100), NDP announcement (0101), control frame extension (0110), control wrapper (0111), BlockAckReq (1000), BlockAck (1001), PS-Poll (1010), RTS (1011), CTS (1100), Ack (1101), CF-End (1110).

For example, the data frame includes (QoS) Data, (QoS) Null, etc. defined in the conventional WLAN. For the management frame, the values of the type fields (B3 and B2) of FIG. 13 are set to 10.

The MAC frame/signal used in this disclosure can be identified through the type field/information and subtype field/information described above. For example, a "trigger frame" in this disclosure may mean a MAC frame in which the type bits B3 and B2 bits in the frame control field of the MAC header are set to 01, and the subtype bits B7, B6, B5, and B4 bits in the frame control field are set to 0010. Various MAC frames described in this disclosure are inserted/included in the data fields of various PPDUs (e.g., HE/VHT/HE/EHT/UHR PPDUs).

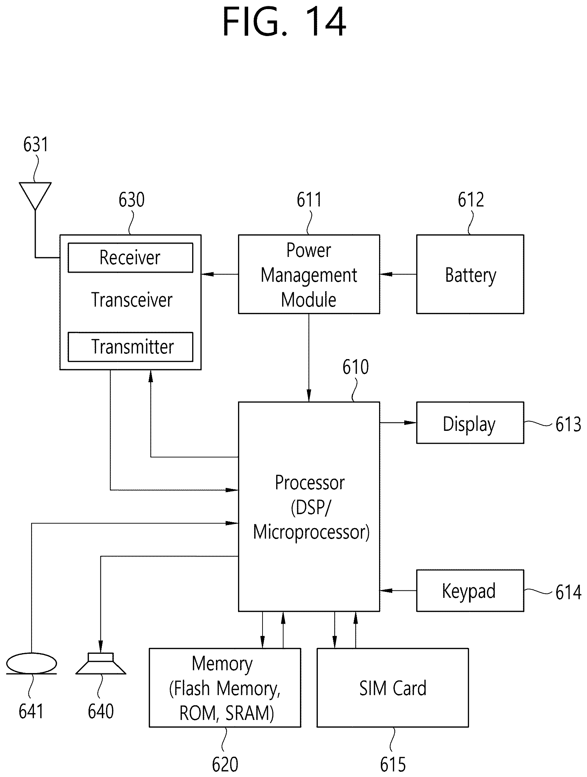

FIG. 14 shows a modified example of a transmitting device and/or a receiving device of the present disclosure.

The devices (e.g., AP STA, non-AP STA) shown in FIGS. 1 to 4 can be modified as shown in FIG. 14. The transceiver 630 of FIG. 14 can be identical to the transceiver 113, 123 of FIG. 1. The transceiver 630 of FIG. 14 can include a receiver and a transmitter.

The processor 610 of FIG. 14 can be identical to the processor 111, 121 of FIG. 1. Alternatively, the processor 610 of FIG. 14 can be identical to the processing chip 114, 124 of FIG. 1.

The memory 150 of FIG. 14 may be the same as the memory 112, 122 of FIG. 1. Alternatively, the memory 150 of FIG. 14 may be a separate external memory different from the memory 112, 122 of FIG. 1.

Referring to FIG. 14, the power management module 611 manages power for the processor 610 and/or the transceiver 630. The battery 612 supplies power to the power management module 611. The display 613 outputs the result processed by the processor 610. The keypad 614 receives input to be used by the processor 610. The keypad 614 may be displayed on the display 613. The SIM card 615 may be an integrated circuit used to securely store an international mobile subscriber identity (IMSI) and its associated keys, which are used to identify and authenticate subscribers in mobile devices such as mobile phones and computers.

Referring to FIG. 14, the speaker (640) may output sound-related results processed by the processor 610. The microphone (641) may receive sound-related input to be used by the processor 610.

Below, the EHT-SIG field applicable to this specification is described.

The EHT-SIG field provides additional signals to the U-SIG field to enable STAs to interpret the EHT MU PPDU. In an EHT MU PPDU, the EHT-SIG field contains U-SIG overflow bits common to all users. The EHT-SIG field further contains resource allocation information that allows STAs to query the corresponding resources to be used in the EHT modulated field of the PPDU. The integer fields of the EHT-SIG field are transmitted in unsigned binary format (LSB first), where the least significant bit (LSB) is in the lowest bit position.

The EHT-SIG field of a 20MHz EHT MU PPDU contains one EHT-SIG content channel. For OFDMA transmission and non-OFDMA transmission for multiple users, the EHT-SIG field of a 40MHz or 80MHz EHT MU PPDU contains two EHT-SIG content channels.

For OFDMA transmissions and non-OFDMA transmissions for multiple users, the EHT-SIG field of an EHT MU PPDU that is 160 MHz or wider contains two EHT-SIG content channels per 80 MHz frequency subblock. When the bandwidth of an EHT MU PPDU for OFDMA transmission is wider than 80 MHz, the EHT-SIG content channels per 80 MHz frequency subblock may carry different information. The EHT-SIG field of an EHT SU transmission or the EHT-SIG field of an EHT sounding NDP contains one EHT-SIG content channel, which is duplicated for each non-punctured 20 MHz subchannel when the EHT PPDU is 40 MHz or wider.

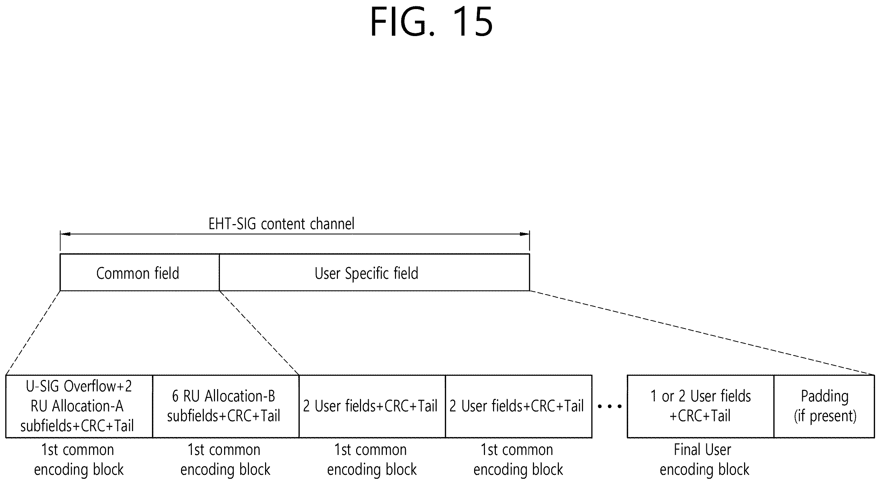

FIG. 15 illustrates an example of an EHT-SIG content channel for 320 MHz OFDMA transmission.

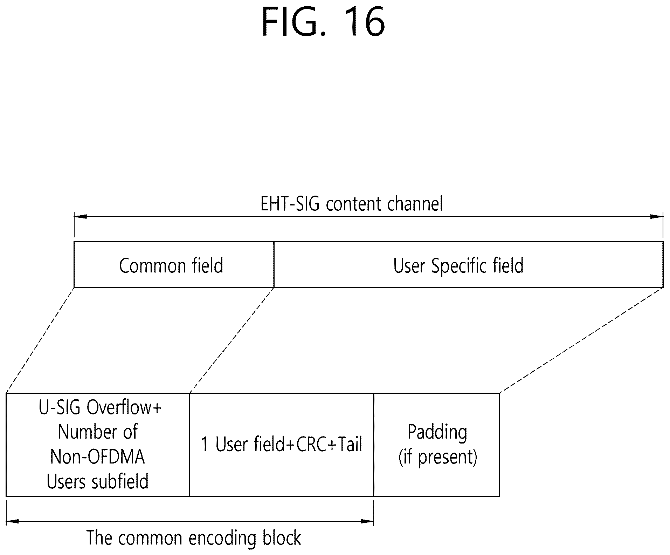

FIG. 16 illustrates an example of an EHT-SIG content channel for EHT SU transmission.

For OFDMA transmission, the common field of the EHT-SIG content channel contains information about resource unit allocation, such as RU allocation to be used in the EHT modulated field of the PPDU, RU allocated to MU-MIMO, and the number of users in the MU-MIMO allocation. The common field consists of one or two common encoding blocks.

In non-OFDMA transmissions, the common field of the EHT-SIG content channel does not include an RU allocation subfield. For non-OFDMA transmissions, excluding EHT sounding NDP, the common field of the EHT-SIG content channel is encoded with the first user field, and this encoded block contains a CRC and a tail, referred to as the common encoding block.

The user-specific field combination of the EHT-SIG content channel contains information on how to decode the payload for all users in the PPDU.

The common field for the OFDMA transmission includes an RU Allocation subfield.

The RU Allocation-A subfield located at B17-B16+9N in the above common field is defined as follows. N RU Allocation-A subfields exist in the EHT-SIG content channel, and if the bandwidth field of the U-SIG field is 0 or 1, N is set to 1, and if the bandwidth field of the U-SIG field is 2, 3, 4, or 5, N is set to 2.

Each RU Allocation-A subfield of the EHT-SIG content channel corresponding to a 20 MHz frequency subchannel indicates an RU or MRU allocation, including the size of the RU or MRU and its arrangement in the frequency domain.

Each Allocation-A subfield also indicates the information necessary to calculate the number of users assigned to each RU or MRU.

In the common field, the RU Allocation-B subfield located at B27+9N-B26+9N+9M is defined as follows. When the bandwidth subfield of the U-SIG field indicates a 160MHz, 320MHz-1 or 320MHz-2 EHT MU PPDU, M RU Allocation-B subfields are present in the EHT-SIG content channel. Here, M is equal to 2 or 6 as follows. When the bandwidth field of the U-SIG field is 3, M is set to 2. When the bandwidth field of the U-SIG field is 4 or 5, M is set to 6.

Each RU Allocation-B subfield of the EHT-SIG content channel corresponding to a 20 MHz frequency subchannel indicates an RU or MRU allocation, including its size and frequency-domain arrangement. This is used in the EHT modulated field of the EHT MU PPDU in the frequency domain.

Each RU Allocation-B subfield also indicates the information necessary to calculate the number of users allocated to each RU or MRU.

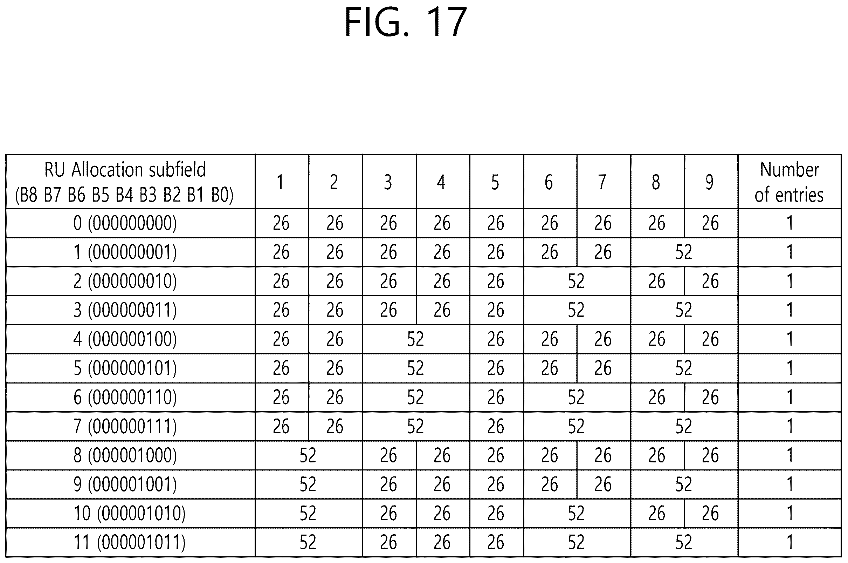

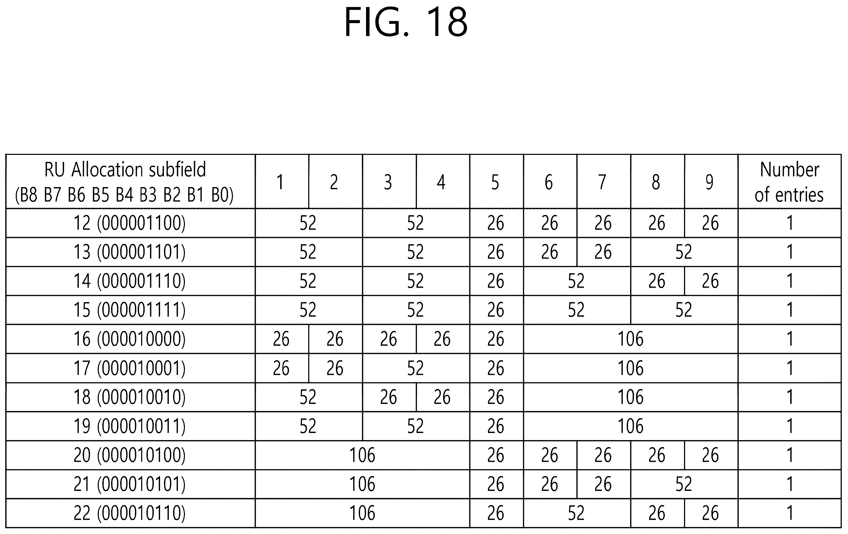

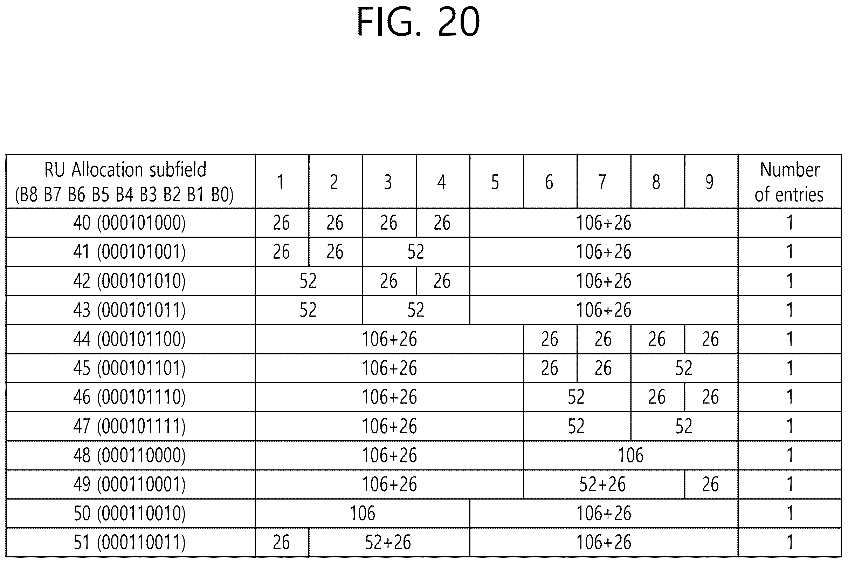

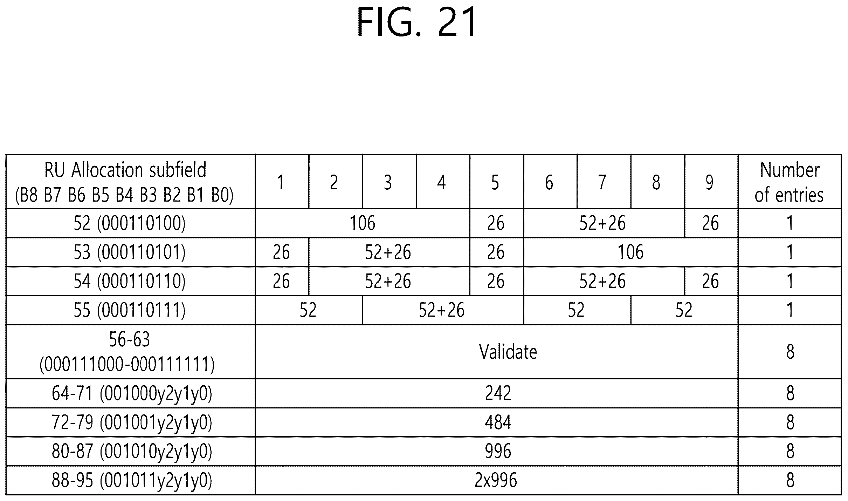

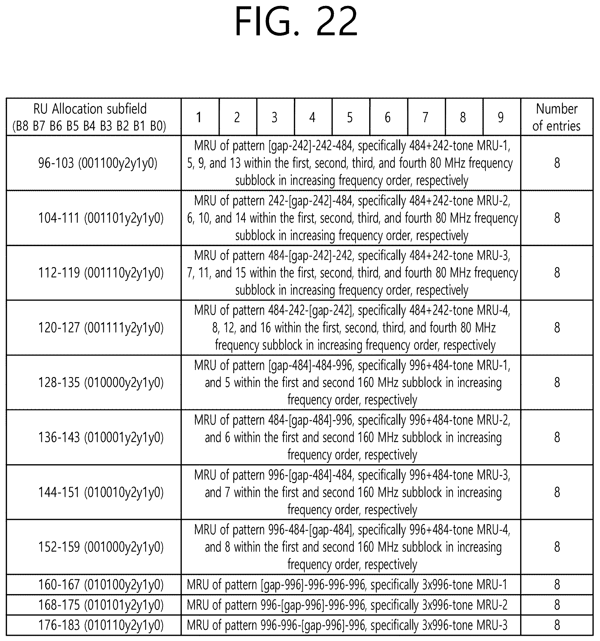

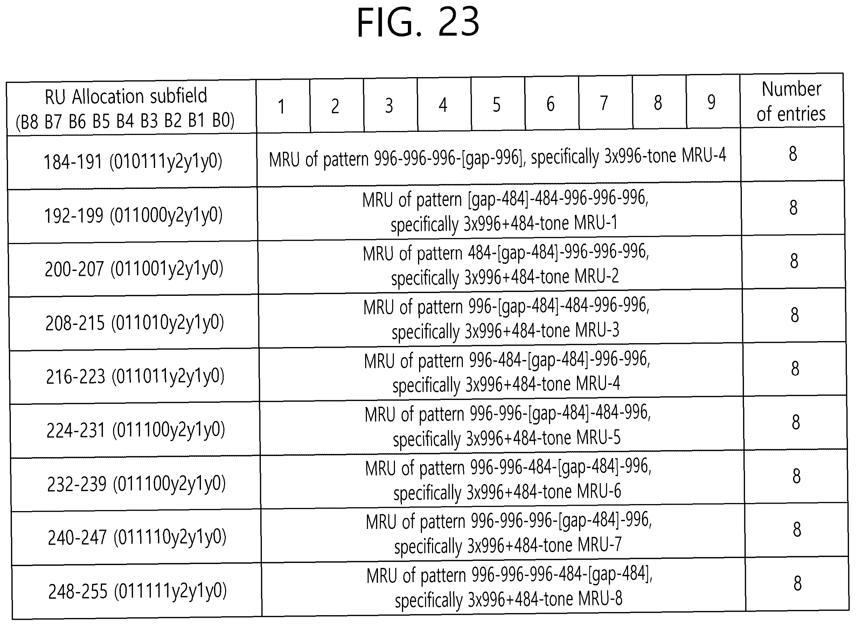

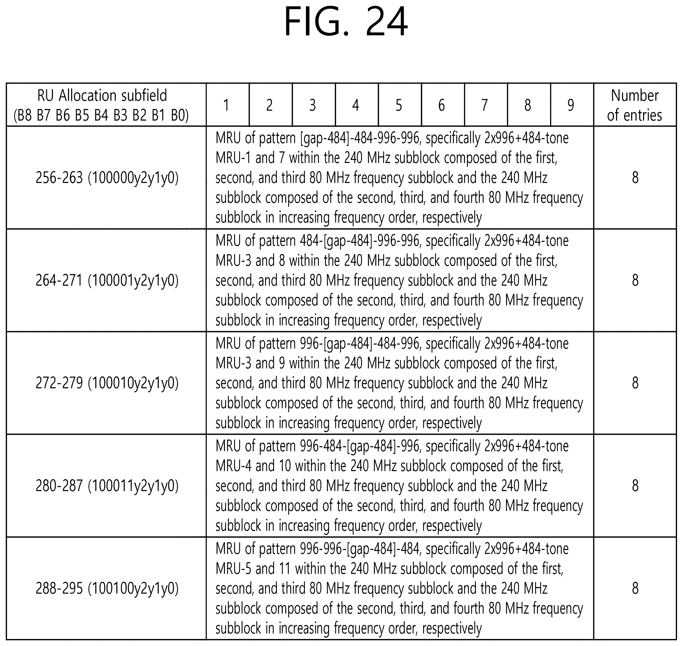

FIGS. 17 to 25 illustrates an example of an RU Allocation subfield defined in an 802.11be WLAN system.

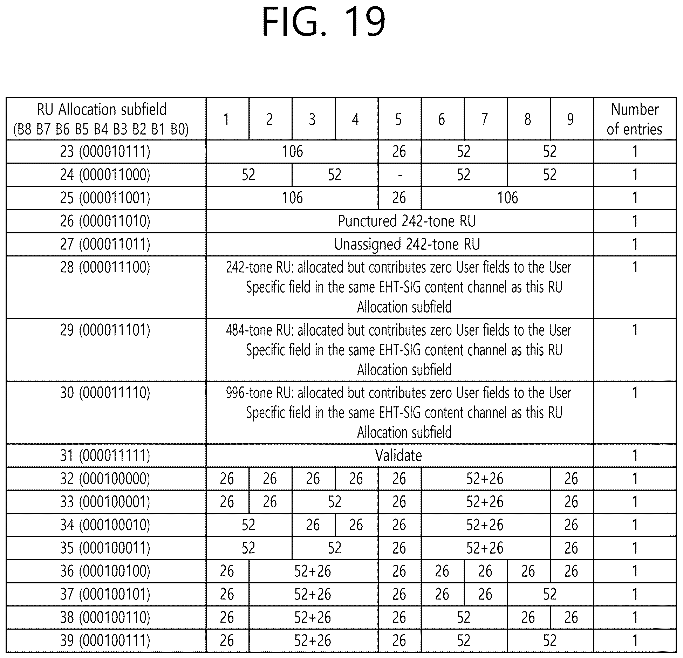

The mapping from the 9-bit RU Allocation subfield to RU allocation and the number of User fields per RU or MRU contributed to the User Specific field of the same EHT-SIG content channel as the RU Allocation subfield are defined in FIGS. 19 to 27.

Referring to FIGS. 17 to 25, when the value of the RU Allocation subfield is 0 to 303, it indicates an allocation pattern of a specific RU or MRU, and when the value of the RU Allocation subfield is 304 to 511, it is set to Disregard.

The large-size MRUs defined for DL and UL non-OFMDA transmissions are as follows:

: 484+242-tone MRU, 996+484-tone MRU, 996+484+242-tone MRU, 2×996+484-tone MRU, 3x996-tone MRU, and 3×996+484-tone MRU

The large-size MRUs defined for DL and UL OFMDA transmissions are as follows:

: 484+242-tone MRU, 996+484-tone MRU, 2x996+484-tone MRU, 3 ×996-tone MRU, and 3×996+484-tone MRU (i.e., the 996+484+242-tone MRU is defined only for non-OFDMA transmissions).

The location of the large size MRU is fixed and defined as follows. Table 1 defines the index of the large size MRU in OFDMA 80MHz PPDU and non-OFDMA 80MHz PPDU.

**[Table 1]**

| MRU type | MRU index | Combinations |
|---|---|---|
| 484+242-tone MRU | MRU 1 | 484-tone RU 2 + 242-tone RU 2; [(gap-242-tone RU) - 242-tone RU - 484-tone RU] |
| | MRU 2 | 484-tone RU 2 + 242-tone RU 1; [242-tone RU - (gap-242-tone RU) - 484-tone RU] |
| | MRU 3 | 484-tone RU 1 + 242-tone RU 4; [484-tone RU - (gap-242-tone RU) - 242-tone RU] |
| | MRU 4 | 484-tone RU 1 + 242-tone RU 3; [484-tone RU - 242-tone RU - (gap-242-tone RU)] |
| NOTE 1-gap-242-tone RU is not part of an MRU and is used to indicate the size of a gap between or beside RUs that form the MRU. | | |
| NOTE 2-non-OFDMA transmission, gap-242-tone RU indicates that one 20 MHz subchannel corresponding to gap-242-tone RU is punctured and is to help indicate the frequency order of the MRU in an 80 MHz PPDU. | | |
| NOTE 3-OFDMA transmission, gap-242-tone RU indicates that one 20 MHz subchannel corresponding to gap-242-tone RU is either punctured or unassigned or assigned to other RUs or MRUs for data transmission, and is to help indicate the frequency order of the MRU within an 80 MHz EHT PPDU. | | |

Tables 2 to 4 define the indices of large size MRUs in OFDMA 160MHz PPDUs and non-OFDMA 160MHz PPDUs.

**[Table 2]**

| MRU type | MRU index | Combinations |
|---|---|---|
| 484+242-tone MRU (only for OFDMA) | MRU 1 | 484-tone RU 2 + 242-tone RU 2; [(gap-242-tone RU) - 242-tone RU -484-tone RU] in lower 80 MHz channel |
| | MRU 2 | 484-tone RU 2 + 242-tone RU 1; [242-tone RU - (gap-242-tone RU) - 484-tone RU] in lower 80 MHz channel |
| | MRU 3 | 484-tone RU 1 + 242-tone RU 4; [484-tone RU - (gap-242-tone RU) -242-tone RU] in lower 80 MHz channel |
| | MRU 4 | 484-tone RU 1 + 242-tone RU 3; [484-tone RU - 242-tone RU - (gap-242-tone RU)] in lower 80 MHz channel |
| | MRU 5 | 484-tone RU 4 + 242-tone RU 6; [(gap-242-tone RU) - 242-tone RU -484-tone RU] in upper 80 MHz channel |
| | MRU 6 | 484-tone RU 4 + 242-tone RU 5; [242-tone RU - (gap-242-tone RU) -484-tone RU] |
| | | in upper 80 MHz channel |
| | MRU 7 | 484-tone RU 3 + 242-tone RU 8; [484-tone RU - (gap-242-tone RU) - 242-tone RU] in upper 80 MHz channel |
| | MRU 8 | 484-tone RU 3 + 242-tone RU 7; [484-tone RU - 242-tone RU - (gap-242-tone RU)] in upper 80 MHz channel |
| NOTE 1-RU is not part of an MRU and is used to indicate the size of a gap between or beside RUs that form the MRU. | | |
| NOTE 2-non-OFDMA transmission, gap-242/484-tone RU indicates that one or more 20 MHz subchannels corresponding to gap-242/484-tone RU are punctured and is to help indicate the frequency order of the MRU in a 160 MHz PPDU. | | |
| NOTE 3-OFDMA transmission, gap-242/484-tone RU indicates that one or more 20 MHz subchannels corresponding to gap-242/484-tone RU are either punctured or unassigned or assigned to other RUs or MRUs for data transmission, and is to help indicate the frequency order of the MRU within a 160 MHz EHT PPDU. | | |

**[Table 3]**

| MRU type | MRU index | Combinations |
|---|---|---|
| 996+484-tone MRU | MRU 1 | 996-tone RU 2 + 484-tone RU 2; [(gap-484-tone RU) - 484-tone RU - 996-tone RU] |
| | MRU 2 | 996-tone RU 2 + 484-tone RU 1; [484-tone RU - (gap-484-tone RU) - 996-tone RU] |
| | MRU 3 | 996-tone RU 1 + 484-tone RU 4; [996-tone RU - (gap-484-tone RU) - 484-tone RU] |
| | MRU 4 | 996-tone RU 1 + 484-tone RU 3; [996-tone RU - 484-tone RU - (gap-484-tone RU)] |
| NOTE 1-RU is not part of an MRU and is used to indicate the size of a gap between or beside RUs that form the MRU. | | |
| NOTE 2-non-OFDMA transmission, gap-242/484-tone RU indicates that one or more 20 MHz subchannels corresponding to gap-242/484-tone RU are punctured and is to help indicate the frequency order of the MRU in a 160 MHz PPDU. | | |
| NOTE 3-OFDMA transmission, gap-242/484-tone RU indicates that one or more 20 MHz subchannels corresponding to gap-242/484-tone RU are either punctured or unassigned or assigned to other RUs or MRUs for data transmission, and is to help indicate the frequency order of the MRU within a 160 MHz EHT PPDU. | | |

**[Table 4]**

| MRU type | MRU index | Combinations |
|---|---|---|
| 996+484+242-tone MRU (only for non-OFDMA) | MRU 1 | 996-tone RU 2 + 484-tone RU 2 + 242-tone RU 2; [(gap-242-tone RU) -242-tone - RU 484-tone RU - 996-tone RU] |
| | MRU 2 | 996-tone RU 2 + 484-tone RU 2 + 242-tone RU 1; [242-tone RU - (gap-242-tone RU) - 484-tone RU - 996-tone RU] |
| | MRU 3 | 996-tone RU 2 + 484-tone RU 1 + 242-tone RU 4; [484-tone RU - (gap-242-tone RU) - 242-tone RU - 996-tone RU] |
| | MRU 4 | 996-tone RU 2 + 484-tone RU 1 + 242-tone RU 3; [484-tone RU - 242-tone RU - (gap-242-tone RU) - 996-tone RU] |
| | MRU 5 | 996-tone RU 1 + 484-tone RU 4 + 242-tone RU 6; [996-tone RU - (gap-242-tone RU) - 242-tone RU - 484-tone RU] |
| | MRU 6 | 996-tone RU 1 + 484-tone RU 4 + 242-tone RU 5; [996-tone RU - 242-tone RU - (gap-242-tone RU) - 484-tone RU] |
| | MRU 7 | 996-tone RU 1 + 484-tone RU 3 + 242-tone RU 8; [996-tone RU - 484-tone RU - (gap-242-tone RU) - 242-tone RU] |
| | MRU 8 | 996-tone RU 1 + 484-tone RU 3 + 242-tone RU 7; [996-tone RU - 484-tone RU - 242-tone RU - (gap-242-tone RU)] |
| NOTE 1-RU is not part of an MRU and is used to indicate the size of a gap between or beside RUs that form the MRU. | | |
| NOTE 2-non-OFDMA transmission, gap-242/484-tone RU indicates that one or more 20 MHz subchannels corresponding to gap-242/484-tone RU are punctured and is to help indicate the frequency order of the MRU in a 160 MHz PPDU. | | |
| NOTE 3-OFDMA transmission, gap-242/484-tone RU indicates that one or more 20 MHz subchannels corresponding to gap-242/484-tone RU are either punctured or unassigned or assigned to other RUs or MRUs for data transmission, and is to help indicate the frequency order of the MRU within a 160 MHz EHT PPDU. | | |

Tables 5 to 9 define the indices of large size MRUs in OFDMA 320MHz PPDUs and non-OFDMA 320MHz PPDUs.

**[Table 5]**

| MRU type | MRU index | Combinations |
|---|---|---|
| 484+242-tone MRU (only for OFDMA) | MRU 1 | 484-tone RU 2 + 242-tone RU 2; [(gap-242-tone RU) - 242-tone RU -484-tone RU] in lower 80 MHz channel in lower 160 MHz |
| | MRU 2 | 484-tone RU 2 + 242-tone RU 1; [242-tone RU - (gap-242-tone RU) - 484-tone RU] in lower 80 MHz channel in lower 160 MHz |
| | MRU 3 | 484-tone RU 1 + 242-tone RU 4; [484-tone RU - (gap-242-tone RU) - 242-tone RU] in lower 80 MHz channel in lower 160 MHz |
| | MRU 4 | 484-tone RU 1 + 242-tone RU 3; [484-tone RU - 242-tone RU - (gap-242-tone RU)] in lower 80 MHz channel in lower 160 MHz |
| | MRU 5 | 484-tone RU 4 + 242-tone RU 6; [(gap-242-tone RU) - 242-tone RU - 484-tone RU] in upper 80 MHz channel in lower 160 MHz |
| | MRU 6 | 484-tone RU 4 + 242-tone RU 5; [242-tone RU - (gap-242-tone RU) -484-tone RU] in upper 80 MHz channel in lower 160 MHz |
| | MRU 7 | 484-tone RU 3 + 242-tone RU 8; [484-tone RU - (gap-242-tone RU) - 242-tone RU] in upper 80 MHz channel in lower 160 MHz |
| | MRU 8 | 484-tone RU 3 + 242-tone RU 7; [484-tone RU - 242-tone RU - (gap-242-tone RU)] in upper 80 MHz channel in lower 160 MHz |
| | MRU 9 | 484-tone RU 6 + 242-tone RU 10; [(gap-242-tone RU) - 242-tone RU - 484-tone RU] in lower 80 MHz channel in upper 160 MHz |
| | MRU 10 | 484-tone RU 6 + 242-tone RU 9; [242-tone RU - (gap-242-tone RU) - 484-tone RU] in lower 80 MHz channel in upper 160 MHz |
| | MRU 11 | 484-tone RU 5 + 242-tone RU 12; [484-tone RU - (gap-242-tone RU) - 242-tone RU] in lower 80 MHz channel in upper 160 MHz |
| | MRU 12 | 484-tone RU 5 + 242-tone RU 11; [484-tone RU - 242-tone RU - (gap-242-tone RU)] in lower 80 MHz channel in upper 160 MHz |
| | MRU 13 | 484-tone RU 8 + 242-tone RU 14; [(gap-242-tone RU) - 242-tone RU - 484-tone RU] in upper 80 MHz channel in upper 160 MHz |
| | MRU 14 | 484-tone RU 8 + 242-tone RU 13; [242-tone RU - (gap-242-tone RU) - 484-tone RU] in upper 80 MHz channel in upper 160 MHz |
| | MRU 15 | 484-tone RU 7 + 242-tone RU 16; [484-tone RU - (gap-242-tone RU) - 242-tone RU] in upper 80 MHz channel in upper 160 MHz |
| | MRU 16 | 484-tone RU 7 + 242-tone RU 15; [484-tone RU - 242-tone RU - (gap-242-tone RU)] in upper 80 MHz channel in upper 160 MHz |
| NOTE 1-RU is not part of an MRU and is used to indicate the size of a gap between or beside RUs that form the MRU. | | |
| NOTE 2-non-OFDMA transmission, gap-242/484/996-tone RU indicates that one or more 20 MHz subchannels | | |
| corresponding to gap-242/484/996-tone RU are punctured and is to help indicate the frequency order of the MRU in a 320 MHz PPDU. | | |
| NOTE 3-OFDMA transmission, gap-242/484/996-tone RU indicates that one or more 20 MHz subchannels corresponding to gap-242/484/996-tone RU are either punctured or unassigned or assigned to other RUs or MRUs for data transmission, and is to help indicate the frequency order of the MRU within a 320 MHz EHT PPDU. | | |

**[Table 6]**

| MRU type | MRU index | Combinations |
|---|---|---|
| 996+484-tone MRU (only for OFDMA) | MRU 1 | 996-tone RU 2 + 484-tone RU 2; [(gap-484-tone RU) - 484-tone RU - 996-tone RU] in lower 160 MHz |
| | MRU 2 | 996-tone RU 2 + 484-tone RU 1; [484-tone RU - (gap-484-tone RU) - 996-tone RU] in lower 160 MHz |
| | MRU 3 | 996-tone RU 1 + 484-tone RU 4; [996-tone RU - (gap-484-tone RU) - 484-tone RU] in lower 160 MHz |
| | MRU 4 | 996-tone RU 1 + 484-tone RU 3; [996-tone RU - 484-tone RU - (gap-484-tone RU)] in lower 160 MHz |
| | MRU 5 | 996-tone RU 4 + 484-tone RU 6; [(gap-484-tone RU) - 484-tone RU - 996-tone RU] in upper 160 MHz |
| | MRU 6 | 996-tone RU 4 + 484-tone RU 5; [484-tone RU - (gap-484-tone RU) - 996-tone RU] in upper 160 MHz |
| | MRU 7 | 996-tone RU 3 + 484-tone RU 8; [996-tone RU - (gap-484-tone RU) - 484-tone RU] in upper 160 MHz |
| | MRU 8 | 996-tone RU 3 + 484-tone RU 7; [996-tone RU - 484-tone RU - (gap-484-tone RU)] in upper 160 MHz |
| NOTE 1-RU is not part of an MRU and is used to indicate the size of a gap between or beside RUs that form the MRU. | | |
| NOTE 2-non-OFDMA transmission, gap-242/484/996-tone RU indicates that one or more 20 MHz subchannels corresponding to gap-242/484/996-tone RU are punctured and is to help indicate the frequency order of the MRU in a 320 MHz PPDU. | | |
| NOTE 3-OFDMA transmission, gap-242/484/996-tone RU indicates that one or more 20 MHz subchannels corresponding to gap-242/484/996-tone RU are either punctured or unassigned or assigned to other RUs or MRUs for data transmission, and is to help indicate the frequency order of the MRU within a 320 MHz EHT PPDU. | | |

**[Table 7]**

| MRU type | MRU index | Combinations |
|---|---|---|
| 2×996+484-tone MRU | MRU 1 | 996-tone RU 2 + 996-tone RU 3 + 484-tone RU 2; [(gap-484-tone RU) - 484-tone RU - 996-tone RU - 996-tone RU - (gap-996-tone RU)] |
| | MRU 2 | 996-tone RU 2 + 996-tone RU 3 + 484-tone RU 1; [484-tone RU - (gap-484-tone RU) - 996-tone RU - 996-tone RU - (gap-996-tone RU)] |
| | MRU 3 | 996-tone RU 1 + 996-tone RU 3 + 484-tone RU 4; [996-tone RU - (gap-484-tone RU) - 484-tone RU - 996-tone RU - (gap-996-tone RU)] |
| | MRU 4 | 996-tone RU 1 + 996-tone RU 3 + 484-tone RU 3; [996-tone RU - 484-tone RU - (gap-484-tone RU) - 996-tone RU - (gap-996-tone RU)] |
| | MRU 5 | 996-tone RU 1 + 996-tone RU 2 + 484-tone RU 6; [996-tone RU - 996-tone RU - (gap-484-tone RU) - 484-tone RU - (gap-996-tone RU)] |
| | MRU 6 | 996-tone RU 1 + 996-tone RU 2 + 484-tone RU 5; [996-tone RU - 996-tone RU - 484-tone RU - (gap-484-tone RU) - (gap-996-tone RU)] |
| | MRU 7 | 996-tone RU 3 + 996-tone RU 4 + 484-tone RU 4; [(gap-996-tone RU) - (gap-484-tone RU) - 484-tone RU - 996-tone RU - 996-tone RU] |
| | MRU 8 | 996-tone RU 3 + 996-tone RU 4 + 484-tone RU 3; [(gap-996-tone RU) - 484-tone RU - (gap-484-tone RU) - 996-tone RU - 996-tone RU] |
| | MRU 9 | 996-tone RU 2 + 996-tone RU 4 + 484-tone RU 6; [(gap-996-tone RU) - 996-tone RU - (gap-484-tone RU) - 484-tone RU - 996-tone RU] |
| | MRU 10 | 996-tone RU 2 + 996-tone RU 4 + 484-tone RU 5; [(gap-996-tone RU) - 996-tone RU - 484-tone RU - (gap-484-tone RU) - 996-tone RU] |
| | MRU 11 | 996-tone RU 2 + 996-tone RU 3 + 484-tone RU 8; [(gap-996-tone RU) - 996-tone RU - 996-tone RU - (gap-484-tone RU) - 484-tone RU] |
| | MRU 12 | 996-tone RU 2 + 996-tone RU 3 + 484-tone RU 7; [(gap-996-tone RU) - 996-tone RU - 996-tone RU - 484-tone RU - (gap-484-tone RU)] |
| NOTE 1-RU is not part of an MRU and is used to indicate the size of a gap between or beside RUs that form the MRU. | | |
| NOTE 2-non-OFDMA transmission, gap-242/484/996-tone RU indicates that one or more 20 MHz subchannels corresponding to gap-242/484/996-tone RU are punctured and is to help indicate the frequency order of the MRU in a 320 MHz PPDU. | | |
| NOTE 3-OFDMA transmission, gap-242/484/996-tone RU indicates that one or more 20 MHz subchannels corresponding to gap-242/484/996-tone RU are either punctured or unassigned or assigned to other RUs or MRUs for data transmission, and is to help indicate the frequency order of the MRU within a 320 MHz EHT PPDU. | | |

**[Table 8]**

| MRU type | MRU index | Combinations |
|---|---|---|
| 3×996-tone MRU | MRU 1 | 996-tone RU 2 + 996-tone RU 3 + 996-tone RU 4; [(gap-996-tone RU) - 996-tone RU - 996-tone RU - 996-tone RU] |
| | MRU 2 | 996-tone RU 1 + 996-tone RU 3 + 996-tone RU 4; [996-tone RU - (gap-996-tone RU) - 996-tone RU - 996-tone RU] |
| | MRU 3 | 996-tone RU 1 + 996-tone RU 2 + 996-tone RU 4; [996-tone RU - 996-tone RU - (gap-996-tone RU) - 996-tone RU] |
| | MRU 4 | 996-tone RU 1 + 996-tone RU 2 + 996-tone RU 3; [996-tone RU - 996-tone RU - 996-tone RU - (gap-996-tone RU)] |
| NOTE 1-RU is not part of an MRU and is used to indicate the size of a gap between or beside RUs that form the MRU. | | |
| NOTE 2-non-OFDMA transmission, gap-242/484/996-tone RU indicates that one or more 20 MHz subchannels corresponding to gap-242/484/996-tone RU are punctured and is to help indicate the frequency order of the MRU in a 320 MHz PPDU. | | |
| NOTE 3-OFDMA transmission, gap-242/484/996-tone RU indicates that one or more 20 MHz subchannels corresponding to gap-242/484/996-tone RU are either punctured or unassigned or assigned to other RUs or MRUs for data transmission, and is to help indicate the frequency order of the MRU within a 320 MHz EHT PPDU. | | |

**[Table 9]**

| MRU type | MRU index | Combinations |
|---|---|---|
| 3×996+484-tone MRU | MRU 1 | 996-tone RU 2 + 996-tone RU 3 + 996-tone RU 4 + 484-tone RU 2; [(gap-484-tone RU) - 484-tone RU - 996-tone RU - 996-tone RU - 996-tone RU] |
| | MRU 2 | 996-tone RU 2 + 996-tone RU 3 + 996-tone RU 4 + 484-tone RU 1; [484-tone RU - (gap-484-tone RU) - 996-tone RU - 996-tone RU - 996-tone RU] |
| | MRU 3 | 996-tone RU 1 + 996-tone RU 3 + 996-tone RU 4 + 484-tone RU 4; [996-tone RU - (gap-484-tone RU) - 484-tone RU - 996-tone RU - 996-tone RU] |
| | MRU 4 | 996-tone RU 1 + 996-tone RU 3 + 996-tone RU 4 + 484-tone RU 3; [996-tone RU - 484-tone RU - (gap-484-tone RU) - 996-tone RU - 996-tone RU] |
| | MRU 5 | 996-tone RU 1 + 996-tone RU 2 + 996-tone RU 4 + 484-tone RU 6; [996-tone RU - 996-tone RU - (gap-484-tone RU) - 484-tone RU - 996-tone RU] |
| | MRU 6 | 996-tone RU 1 + 996-tone RU 2 + 996-tone RU 4 + 484-tone RU 5; [996-tone RU - 996-tone RU - 484-tone RU - (gap-484-tone RU) - 996-tone RU] |
| | MRU 7 | 996-tone RU 1 + 996-tone RU 2 + 996-tone RU 3 + 484-tone RU 8; [996-tone RU - 996-tone RU - 996-tone RU - (gap-484-tone RU) - 484-tone RU] |
| | MRU 8 | 996-tone RU 1 + 996-tone RU 2 + 996-tone RU 3 + 484-tone RU 7; [996-tone RU - 996-tone RU - 996-tone RU - 484-tone RU - (gap-484-tone RU)] |
| NOTE 1-RU is not part of an MRU and is used to indicate the size of a gap between or beside RUs that form the MRU. | | |
| NOTE 2-non-OFDMA transmission, gap-242/484/996-tone RU indicates that one or more 20 MHz subchannels corresponding to gap-242/484/996-tone RU are punctured and is to help indicate the frequency order of the MRU in a 320 MHz PPDU. | | |
| NOTE 3-OFDMA transmission, gap-242/484/996-tone RU indicates that one or more 20 MHz subchannels corresponding to gap-242/484/996-tone RU are either punctured or unassigned or assigned to other RUs or MRUs for data transmission, and is to help indicate the frequency order of the MRU within a 320 MHz EHT PPDU. | | |

The user-specific fields of the EHT-SIG content channel consist of zero or more user-encoded blocks and padding (if any), as shown in FIGS. 15 and 16.

For DL OFDMA transmissions (in the U-SIG field, the UL/DL fields are set to 0 and the PPDU Type And Compression Mode field is set to 0), the number of user fields is indicated by the RU Allocation subfield.

Each non-final user encoding block consists of two user fields containing information for the two STAs used to decode the payload. The final user encoding block contains information for one or two users, depending on the number of user fields in the EHT-SIG content channel.

For EHT SU transmissions (UL/DL fields in the U-SIG field are set to 0 or 1, PPDU Type And Compression Mode field is set to 1, and EHT-SIG MCS field and Number of EHT-SIG Symbols field are not set to 0 at the same time) and for DL non-OFDMA transmissions for multiple users (UL/DL fields in the U-SIG field are set to 0 and PPDU Type And Compression Mode field is set to 2), the number of users is indicated by the Number Of Non-OFDMA Users subfield.

The common fields of the EHT-SIG content channel are encoded together with the first user field of the same content channel. This common encoding block contains a CRC and a tail.

For non-OFDMA transmissions for multiple users, a user encoding block exists if the content channel contains more than one user field.

There are N user fields in the user encoding block, as follows: This is the end-user encoding block. If there is only one user in the end-user encoding block, N=1; otherwise, N=2.

The formats of the user fields for non-MU-MIMO allocation and MU-MIMO allocation are defined separately.

The user fields for non-MU-MIMO allocation include the STA-ID subfield, MCS subfield, Reserved subfield, NSS subfield, Beamformed subfield, and Coding subfield. The user fields for MU-MIMO allocation include the STA-ID subfield, MCS subfield, Coding subfield, and Spatial Configuration subfield.

### <Embodiments applicable to this specification>

In 802.11be, MRU is defined considering various preamble puncturing patterns and channel conditions in SU/MU transmission to efficiently use wide bandwidth (up to 320MHz). The channel status of each subchannel within a large-size MRU allocated to an STA may be different, and signal transmission efficiency can be improved by applying a high Modulation and Coding Scheme (MCS) and a high Number of Spatial Streams (Nss) to subchannels with good channel conditions compared to channels with poor channel conditions. In this specification, we propose a method for transmitting signals by applying different MCSs and Nss within an MRU to efficiently transmit signals for a large-size MRU allocated for signal transmission to non-AP STAs/APs.

Considering backward compatibility, an 802.11be MU-PPDU for transmitting signals to multiple STAs may include L-STF, L-LTF, L-SIG, RL-SIG, U-SIG, EHT-SIG, EHT-STF, EHT-LTF, and Data.

The U-SIG may include version-independent and version-dependent fields.

The version-independent field may include a 3-bit version identifier indicating the 802.11be and later Wi-Fi versions, a 1-bit DL/UL field, BSS color, TXOP duration, etc. The version-dependent field may include information such as the PPDU format type, bandwidth, and MCS, etc.

The U-SIG is a jointly encoded two-symbol U-SIG, consisting of 52 data tones and 4 pilot tones every 20 MHz. Furthermore, the U-SIG is modulated in the same manner as the HE-SIG-A of 802.11ax (i.e., modulated at a BPSK 1/2 code rate).

EHT-SIG may be divided into common and user-specific fields and encoded with a variable MCS. The common field may indicate information for the spatial stream and RU being used, while the user-specific field may indicate information ID, MCS, and coding information used for a specific user or STA.

Furthermore, EHT-SIG may be composed of different information in 80MHz units, and within 80MHz, it consists of two EHT-SIG content channels (EHT-SIG CC1 and EHT-SIG CC2).

The large size MRU defined in 802.11be can be defined by BW (Bandwidth) as follows.
i) 80MHz : 242+484-tone MRU
ii) 160MHz : 996+484-tone MRU, 996+484+242-tone MRU (only non-OFDMA)
iii) 320MHz : 2x996+484-tone MRU, 3x996-tone MRU, 3x996+484-tone MRU

The large size MRU was defined in 802.11be considering channel puncturing and interference, and 802.11be supports a method of transmitting signals by allocating frequency resources according to channel conditions. However, there is a problem that the overall transmission efficiency and throughput are reduced when transmitting signals by commonly applying transmission parameters to large size MRUs even when the channel condition of a specific channel within the large size MRU is poor due to Overlapping Basic Service Set (OBSS) or fading. Therefore, this specification proposes a method of transmitting signals by applying different transmission parameters to each RU considering the channel status of a specific RU within the large size MRU. That is, this specification proposes a method of transmitting signals using different MCSs and Nss for each specific RU within the allocated large size MRU.

First, this specification proposes a method for configuring frequency blocks within a large-size MRU (L_MRU) for applying different MCSs and NSSs.

Using the previously defined large-size MRU, the following method is applied to transmit signals by applying different MCSs and NSSs to specific frequency blocks within the large-size MRU.
- Since L_MRU is defined for a BW of 80MHz or more, this embodiment also applies to cases where the BW is 80MHz or more.
- The minimum frequency block size for applying different MCSs and NSSs within an L_MRU may be limited to a 242-tone RU size.

Furthermore, the block size can be determined based on 20MHz, taking into account channel variation and channel status.

Considering that the channel status per RU will not change significantly within 20MHz, this embodiment does not mention Small size MRU (S_MRU), but S_MRU may also be configured for each specific frequency block.
- The number of frequency blocks within an L_MRU can be flexibly configured based on channel status. However, flexibility increases signaling overhead and complexity, so restrictions are necessary.
- This embodiment considers configuring two or three frequency blocks within an L_MRU. The following embodiment details a configuration with two frequency blocks.

However, even if the number of frequency blocks increases, the proposal of this embodiment can be applied.
- The coding used for frequency blocks within L_MRU is considered to be the same for complexity reasons, but there is no need to restrict transmission using different encodings.

As mentioned above, when the number of frequency blocks in an L-MRU is two, the frequency blocks for an L_MRU within a BW may be defined as follows:
- Blocks for applying different MCSs and Nss within an L_MRU may be configured with RUs included per 80MHz or 160MHz based on the PPDU BW.
- For example, frequency blocks may be defined as follows:

Composed of RU(s) included in the Primary 80/160 MHz => Frequency Block 1

Composed of RU(s) included in the Secondary 80/160 MHz => Frequency Block 2
- The configuration of frequency blocks 1 and 2 may be configured with a combination of 242/484/996-tone RUs.
- Since the frequency blocks are configured in 80/160 MHz units as described above, there is no need to define new RU/MRU sizes, which has the advantage of eliminating additional complexity and increased signaling overhead.

### 1) 80MHz

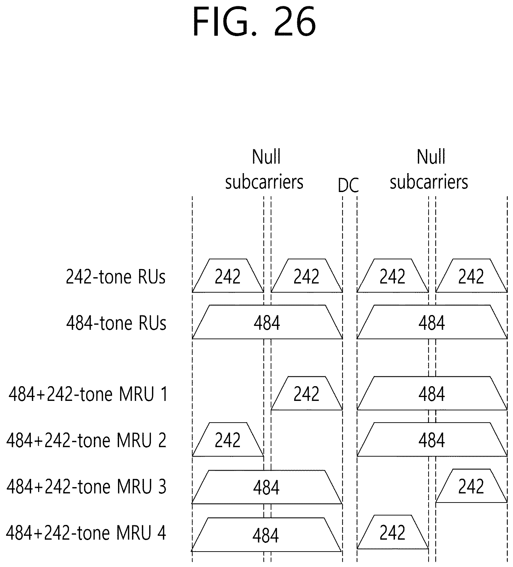

FIG. 26 illustrates the arrangement of 484+242-tone MRUs in an 80MHz bandwidth.

At 80MHz, the MRU is configured as shown in FIG. 26, and an example of the configuration of two blocks within 80MHz is set as follows.

### < frequency Block 1, frequency Block 2>

- 2nd_242, 2nd_484
- 1st_242, 2nd_484
- 1st_484 ,4th_242
- 1st_484 ,3rd_242

### 2) 160MHz

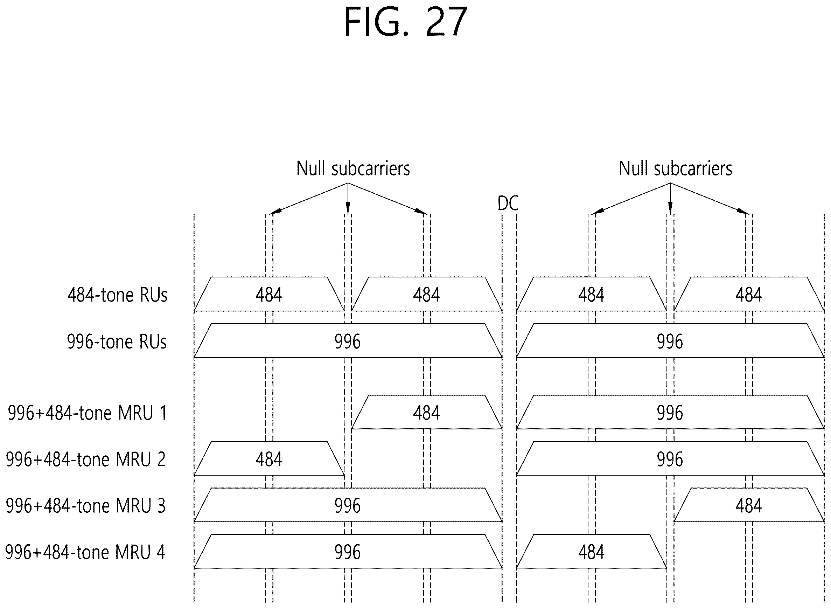

FIG. 27 illustrates the arrangement of 996+484-tone MRUs in a 160MHz bandwidth.

At 160MHz, the MRU is configured as shown in FIG. 27, and an example of the configuration of two frequency blocks within 160MHz is set as follows.

### < frequency Block 1, frequency Block 2>

- 2nd_484, 2nd_996
- 1st_484, 2nd_996
- 1st_996, 4th_484
- 1st_996, 3rd_484

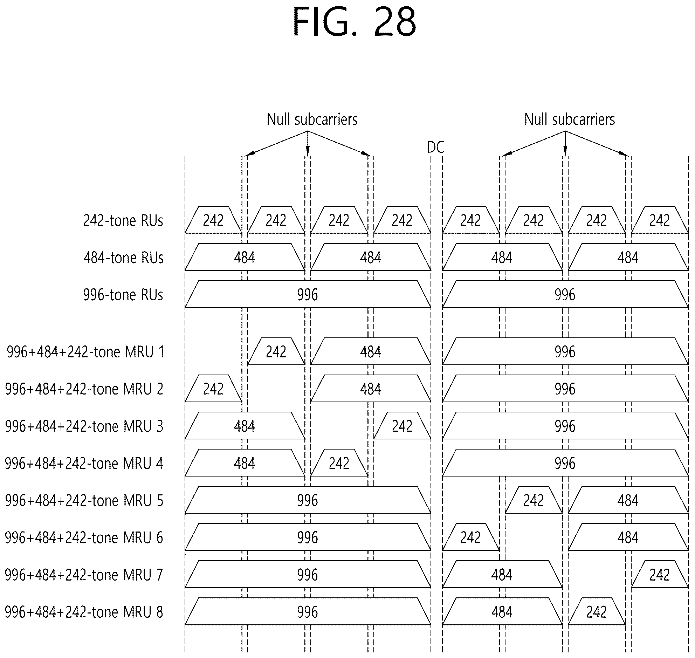

FIG. 28 illustrates the arrangement of 996+484+242-tone MRUs in a 160MHz bandwidth.

Also, at 160MHz, the MRU is configured as shown in FIG. 28, and an example of the configuration of two frequency blocks within 160MHz is set as follows.

### < frequency Block 1, frequency Block 2>

- 2nd_242+2nd_484, 2nd_996
- 1st_242+2nd_484, 2nd_996
- 1st_484+4th_242, 2nd_996
- 1st_484+3rd_242, 2nd_996
- 1st_996, 6th_242+4th_484
- 1st_996, 5th_th242+4th_484
- 1st_996, 8th_242+3rd_484
- 1st_996, 7th_242+3rd_484

### 2) 360MHz

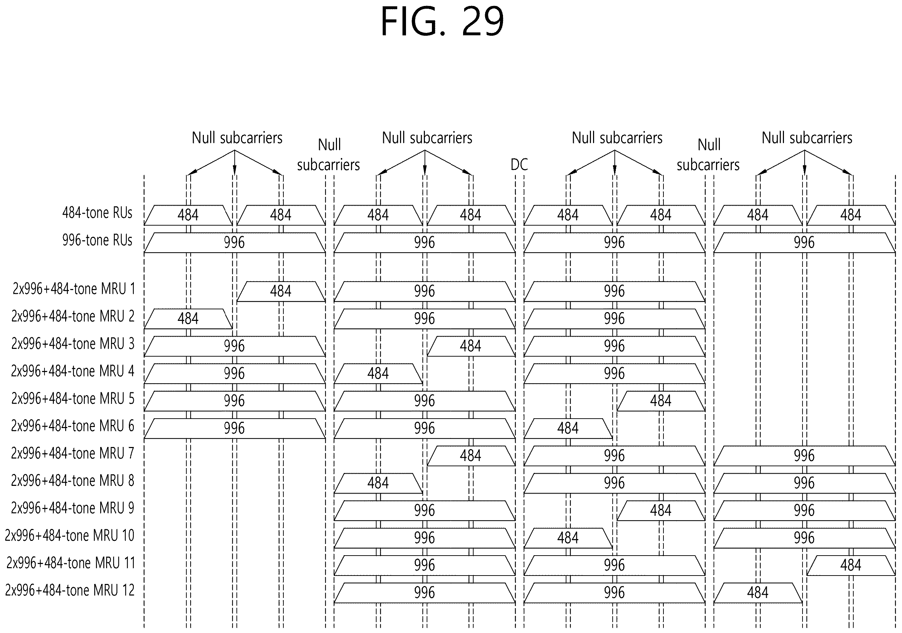

FIG. 29 illustrates the arrangement of 2x996+484-tone MRUs in a 320MHz bandwidth.

At 320MHz, the MRU is configured as shown in FIG. 29, and an example of the configuration of two frequency blocks within 320MHz is set as follows.

### < frequency Block 1, frequency Block 2>

- 2nd_484+2nd_996, 3rd_996
- 1st_484 +2nd_996, 3rd_996
- 1st_996+fourth_484, 3rd_996
- 1st_996+ 3rd_484, 3rd_996
- 2x996(1st_996+2nd_996), 6th_484
- 2x996(1st_996+2nd_996), 5th_484
- 4th_484, 2x996 (3rd_996+4th_996)
- 3rd_484, 2x996 (3rd_996+4th_996)
- 2nd_996, 6th_484+ 4th_996
- 2nd_996, 5th_484+ 4th_996
- 2nd_996, 8th_484+ 3rd_996
- 2nd_996, 7th_484+ 3rd_996

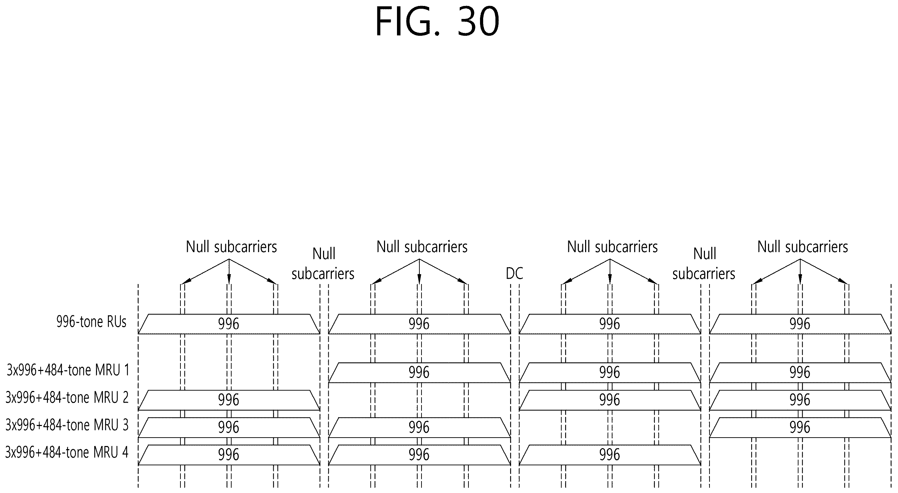

FIG. 30 illustrates the layout of 3x996-tone MRUs in a 320 MHz bandwidth.

Also, at 320MHz, the MRU is configured as shown in FIG. 30, and an example of the configuration of two frequency blocks within 320MHz is set as follows.

### < frequency Block 1, frequency Block 2>

- 2nd_996, 2x996 (3rd_996+4th_996)
- 1st_996, 2x996 (3rd_996+4th_996)
- 2x996 (1st_996+2nd_996), 4th_996
- 2x996 (1st_996+2nd_996), 3rd_996

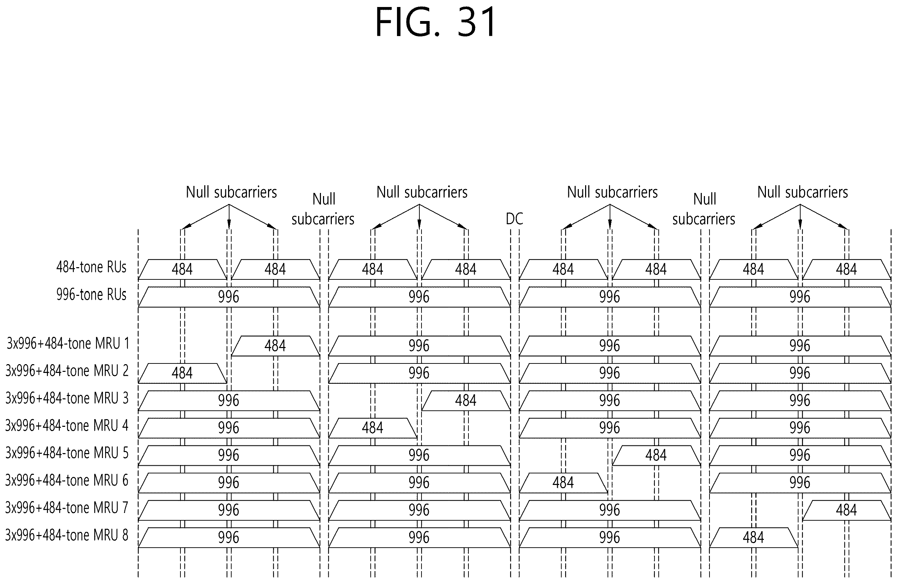

FIG. 31 illustrates the layout of 3x996+484-tone MRUs in a 320 MHz bandwidth.

Also, at 320MHz, the MRU is configured as shown in FIG. 31, and an example of the configuration of two frequency blocks within 320MHz is set as follows.

### < frequency Block 1, frequency Block 2>

- 2nd_484+2nd_996, 3rd_996+4th_996
- 1st_484+2nd_996, 3rd_996+4th_996
- 4th_484+1st_996, 3rd_996+4th_996
- 3rd_484+1st_996, 3rd_996+4th_996
- (1st_996+2nd_996), 6th_484+4th_996
- (1st_996+2nd_996), 5th_484+4th_996
- (1st_996+2nd_996), 8th_484+3rd_996
- (1st_996+2nd_996), 7th_484+3rd_996

Unlike the above, the two frequency blocks within the L_MRU may be configured flexibly rather than within 80MHz or 160MHz units. For example, the following frequency block configuration can be added for a 2x996+484-tone MRU of 320MHz.

### < frequency block 1, frequency block 2>

- 1st_996, fourth_484+ 3rd_996
- 1st_996, 3rd_484+ 3rd_996
- 1st_996, 6th_484+ 2nd_996
- 1st_996, 5th_484+ 2nd_996
- 4th_484+ 3rd_996, 4th_996
- 3rd_484+ 3rd_996, 4th_996
- 6th_484+ 2nd_996, 4th_996
- 5th_484+ 2nd_996, 4th_996

In addition, this specification proposes a method for indicating RU allocation (using reserved values) for two frequency blocks set for each L_MRU.

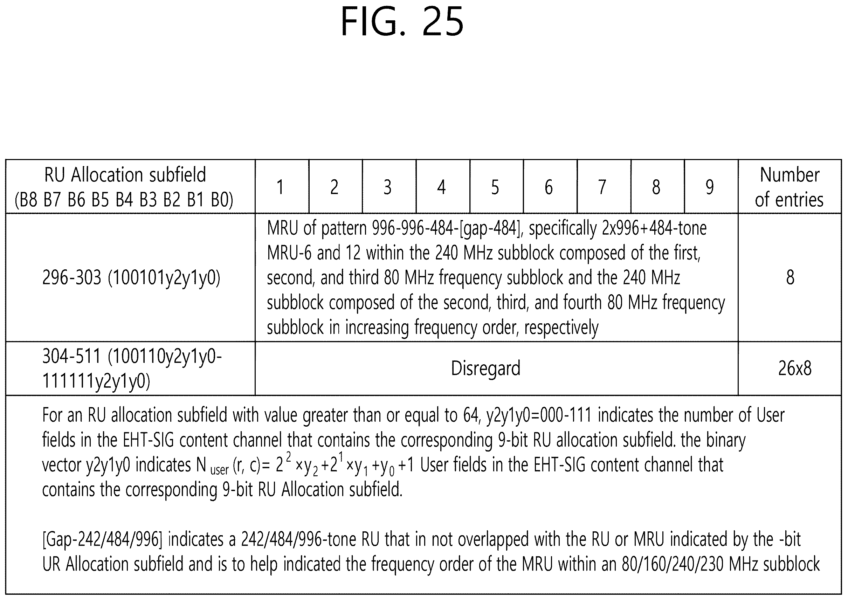

As described above, allocation or indication for two frequency blocks within an L_MRU according to BW can be performed through the RU allocation subfield. In this case, the indication for setting the frequency blocks within an L_MRU according to BW is performed using the reserved value (or Disregard bits) of the existing RU allocation subfield (see FIG. 25).

Since the reserved value of the existing RU allocation subfield is used to indicate the configuration of frequency blocks within the L_MRU, there is no need to define additional signaling, which has the advantage of not increasing signaling overhead.

As proposed above, the RU allocation subfield (the RU allocation subfield for each UHR-SIG content channel or next-SIG content channel) used to distinguish and indicate the two frequency blocks within the L_MRU can be configured as follows:

**[Table 10]**

| **RU Allocation subfield (B8 B7 B6 B5 B4 B3 B2 B1 B0)** | **1** | **2** | **3** | **4** | **5** | **6** | **7** | **8** | **9** | **Number of entries** |
|---|---|---|---|---|---|---|---|---|---|---|
| ... | ... | | | | | | | | | ... |
| 304 (100110000) | MRU of pattern [gap-242]-242-484, Block [2nd_242, 2nd_484] within the first, second, third, and fourth 80 MHz frequency subblock in increasing frequency order, respectively | | | | | | | | | 1 |
| 305 (100110001) | MRU of pattern 242-[gap-242]-484, Block[1st_242, 2nd_484] within the first, second, third, and fourth 80 MHz frequency subblock in increasing frequency order, respectively | | | | | | | | | 1 |
| 306 (100110010) | MRU of pattern 484-[gap-242]-242, Block[1st_484 ,4th_242] within the first, second, third, and fourth 80 MHz frequency subblock in increasing frequency order, respectively | | | | | | | | | 1 |
| 306 (100110011) | MRU of pattern 484-242-[gap-242], Block[1st_484 ,3rd_242] within the first, second, third, and fourth 80 MHz frequency subblock in increasing frequency order, respectively | | | | | | | | | 1 |
| 307 (100110100) | MRU of pattern [gap-484]-484-996, Block[2nd_484, 2nd_996] within the first and second 160 MHz subblock in increasing frequency order, respectively | | | | | | | | | 1 |
| 308 (100110101) | MRU of pattern 484-[gap-484]-996, Block[1st_484, 2nd_996] within the first and second 160 MHz subblock in increasing frequency order, respectively | | | | | | | | | 1 |
| 309 (100110110) | | | | | | MRU of pattern 996-[gap-484]-484, Block[1st_996, 4th_484] within the first and second 160 MHz subblock in increasing frequency order, respectively | 1 | | | |
| 310 (100110111) | | | | | | MRU of pattern 996-484-[gap-484], Block[1st_996, 3rd_484] within the first and second 160 MHz subblock in increasing frequency order, respectively | 1 | | | |
| 311 (100111000) | | | | | | MRU of pattern [gap-242]-242-484-996, Block[2nd_242+2nd_484, 2nd_996] within the first and second 160 MHz subblock in increasing frequency order, respectively | 1 | | | |
| 312 (100111001) | | | | | | MRU of pattern 242-[gap-242]-484-996, Block[1st_242+2nd_484, 2nd_996] within the first and second 160 MHz subblock in increasing frequency order, respectively | 1 | | | |
| 313 (100111010) | | | | | | MRU of pattern 484-[gap-242]-242-996, Block[1st_484+4th_242, 2nd_996] within the first and second 160 MHz subblock in increasing frequency order, respectively | 1 | | | |
| 314 (100111011) | | | | | | MRU of pattern 484-242-[gap-242]-996, Block[1st_484+3rd_242, 2nd_996] within the first and second 160 MHz subblock in increasing frequency order, respectively | 1 | | | |
| 315 (100111100) | | | | | | MRU of pattern 996-[gap-242]-242-484, Block[1st_996, 6th_242+4th_484] within the first and second 160 MHz subblock in increasing frequency order, respectively | 1 | | | |
| 316 (100111101) | | | | | | MRU of pattern 996-242-[gap-242]-484, Block[1st_996, 5th_242+4th_484] within the first and second 160 MHz subblock in increasing frequency order, respectively | 1 | | | |
| 317 (100111110) | | | | | | MRU of pattern 996-484-[gap-242]-242, Block[1st_996, 8th_242+3rd_484] within the first and second 160 MHz subblock in increasing frequency order, respectively | 1 | | | |
| 318 (100111111) | | | | | | MRU of pattern 996-484-242-[gap-242], Block[1st_996, 7th_242+3rd_484] within the first and second 160 MHz subblock in increasing frequency order, respectively | 1 | | | |
| 319 (101000000) | | | | | | MRU of pattern [gap-996]-996-996-996, Block [2nd_996, 2x996 (3rd_996+4th_996)] | 1 | | | |
| 320 (101000001) | | | | | | MRU of pattern 996-[gap-996]-996-996, Block [1st_996, 2x996 (3rd_996+4th_996)] | 1 | | | |
| 321 (101000010) | | | | | | MRU of pattern 996-996-[gap-996]-996, Block [2x996 (1st_996+2nd_996), 4th_996] | 1 | | | |
| 322 (101000011) | | | | | | MRU of pattern 996-996-996-[gap-996], Block[2x996 (1st_996+2nd_996), 3rd_996] | 1 | | | |
| 323 (101000100) | | | | | | MRU of pattern [gap-484]-484-996-996-996, Block[2nd_484+2nd_996, 3rd_996+4th_996] | 1 | | | |
| 324 (101000101) | | | | | | MRU of pattern 484-[gap-484]-996-996-996, Block[1st_484+2nd_996, 3rd_996+4th_996] | 1 | | | |
| 325 (101000110) | | | | | | MRU of pattern 996-[gap-484]-484-996-996, Block[4th_484+1st_996, 3rd_996+4th_996] | 1 | | | |
| 326 (101000111) | | | | | | MRU of pattern 996-484-[gap-484]-996-996, Block[3rd_484+1st_996, 3rd_996+4th_996] | 1 | | | |
| 327 (101001000) | | | | | | MRU of pattern 996-996-[gap-484]-484-996, Block[(1st_996+2nd_996), 6th_484+4th_996] | 1 | | | |
| 328 (101001001) | | | | | | MRU of pattern 996-996-484-[gap-484]-996, Block[(1st_996+2nd_996), 5th_484+4th_996] | 1 | | | |
| 329 (101001010) | | | | | | MRU of pattern 996-996-996-[gap-484]-484, Block[(1st_996+2nd_996), 8th_484+3rd_996 ] | 1 | | | |
| 330 (101001011) | | | | | | MRU of pattern 996-996-996-484-[gap-484], Block[(1st_996+2nd_996), 7th_484+3rd_996 ] | 1 | | | |
| 331 (101001100) | | | | | | MRU of pattern [gap-484]-484-996-996, Block[2nd_484+2nd_996, 3rd_996 ] within the 240 MHz subblock composed of the first, second, and third 80 MHz frequency subblock and the 240 MHz subblock composed of the second, third, and fourth 80 MHz frequency subblock in increasing frequency order, respectively | 1 | | | |
| 332 (101001101) | | | | | | MRU of pattern 484-[gap-484]-996-996, Block[1st_484 +2nd_996, 3rd_996 ] within the 240 MHz subblock composed of the first, second, and third 80 MHz frequency subblock and the 240 MHz subblock composed of the second, third, and fourth 80 MHz frequency subblock in increasing frequency order, respectively | 1 | | | |
| 333 (101001110) | | | | | | MRU of pattern 996-[gap-484]-484-996, Block[1st_996+fourth_484, 3rd_996] within the 240 MHz subblock composed of the first, second, and third 80 MHz frequency subblock and the 240 MHz subblock composed of the second, third, and fourth 80 MHz frequency subblock in increasing frequency order, respectively | 1 | | | |
| 334 (101001111) | | | | | | MRU of pattern 996-484-[gap-484]-996, Block[1st_996+ 3rd_484, 3rd_996 ] within the 240 MHz subblock composed of the first, second, and third 80 MHz frequency subblock and the 240 MHz subblock composed of the second, third, and fourth 80 MHz frequency subblock in increasing frequency order, respectively | 1 | | | |
| 335 (101010000) | | | | | | MRU of pattern 996-996-[gap-484]-484, Block[2x996(1st_996+2nd_996), 6th_484 ] within the 240 MHz subblock composed of the first, second, and third 80 MHz frequency subblock and the 240 MHz subblock composed of the second, third, and fourth 80 MHz frequency subblock in increasing frequency order, respectively | 1 | | | |
| 336 (101010001) | | | | | | MRU of pattern 996-996-484-[gap-484], Block[2x996(1st_996+2nd_996), 5th_484 ] within the 240 MHz subblock composed of the first, second, and third 80 MHz frequency subblock and the 240 MHz subblock composed of the second, third, and fourth 80 MHz frequency subblock in increasing frequency order, respectively | 1 | | | |
| 337-511 (101010010-111111y2y1y0) | | | | | | Disregard | | | | |

In the above case, since different MCS and Nss are applied to two frequency blocks (or RUs) within one L_MRU, the AP can configure two user fields to indicate transmission information for each frequency block. In this case, the entry for each allocation in Table 10 can be defined as 2 to indicate that there are two user fields for the allocation.

As previously suggested, if the frequency block configuration within L_MRU is performed flexibly, such as by allocating block sizes equally rather than based on primary/secondary 80/160 MHz, additional allocations other than those shown in Table 10 can be indicated using disregards or reserved values.
- As described above, frequency blocks set within the L-MRU according to BW can apply different MCSs and NSSs to each block depending on the channel status. For blocks with good channel status, signals can be transmitted using a high data range or high MCS.
- In the above case, there is no need to define a separate RU because the previously defined L_MRU is reused to support transmissions applying different MCSs and NSSs.
- Considering the NSS capability that an STA can transmit, the NSS is set so that the total NSS of two frequency blocks does not exceed 8.

For example, the Nss of two blocks can each be set to a maximum of 4 (as in MU-MIMO).

Unlike the above case, the Nss per block can be flexibly set to satisfy Nss1 for block 1 + Nss2 for block 2 <= 8. For example, Nss1 may be 1 and Nss2 may be 7.
- As described above, by distinguishing frequency blocks within an L_MRU and applying independent MCS and Nss to each frequency block based on channel status, signals can be transmitted, thereby improving throughput and reliability compared to transmitting signals using a unified MCS within the L_MRU.
- However, this has the disadvantage of requiring separate processing for two blocks within an L_MRU, which may increase complexity. In other words, applying different MCSs and Nss requires using separate encoders for each block, which can increase complexity. Therefore, this specification is limited to two blocks for explanation.

Additionally, this specification proposes a signaling method for transmitting L_MRUs with different MCSs and Nss.

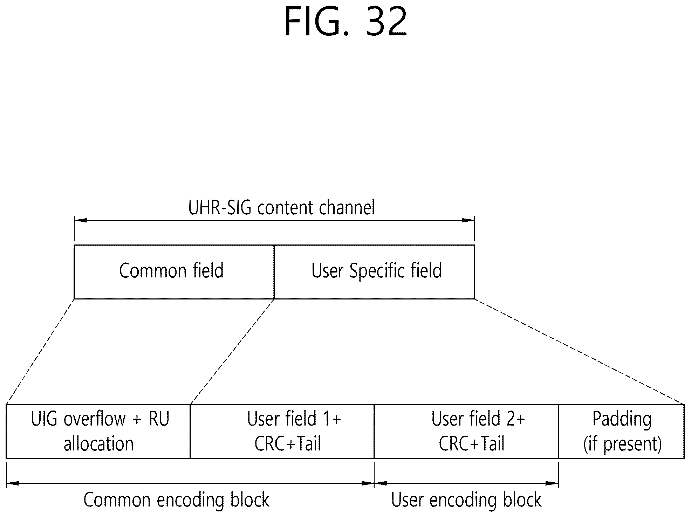

As in the above case, the signaling for transmitting L_MRUs with different MCSs and Nss can be configured as follows depending on the transmission mode (i.e., Single User (SU) or Multi User (MU)).
1) Signaling Method in SU (non-OFMDA) Transmission
   A. When transmitting signals using two different MCSs and NSSs using L_MRU, the UHR or next Wi-Fi PPDU for SU transmission is configured to include a UHR-SIG or next version-SIG following the U-SIG.
   B. In this case, when transmitting SU, the U-SIG indicates that two separate MCSs are applied to a single L_MRU.
      - The indicator can indicate that two separate MCSs are applied to my L_MRU and the signal is transmitted using the validate or disregards bit of U-SIG. For example, one of the bits B20-B24, B25 of U-SIG1 and B2, B8 of U-SIG 2 can be used.
   C. When transmitting SU, the UHR-SIG or next version-SIG included in the PPDU is composed of both a common field and a user field, and can be configured as follows:
      - To apply different MCS and Nss to each block of L_MRU, the UHR-SIG or next version-SIG is composed of a common field and an RU allocation subfield using the values defined in Table 10 above, and the corresponding user field is composed of two user fields.
      - In this case, the user field can be configured identically by reusing the EHT user field, and the AID of each user field is set identically.
         A. Content transmitted through user fields, excluding MCS and Nss, can be configured identically. MCS and Nss can be configured differently depending on the frequency block.
         B. Since two user fields are transmitted per STA, there is a disadvantage of increased user field overhead.
      - In order to indicate which frequency block the corresponding User field corresponds to within the L_MRU, an indicator for this can be included in the User field.
         A. In this case, the indicator can utilize reserved bit B15 in the User field. For example, setting B15 to 0 can indicate frequency block 1, and setting B15 to 1 can indicate frequency block 2. In other cases, the frequency order of the block can be set using the value of B15. For example, if B15 is set to 1, it can indicate an upper frequency resource block, and if B15 is set to 0, it can indicate a lower frequency resource block. This is one embodiment, and the opposite can also be set.
      - The User field configured in this way can be encoded as in FIG. 32.

FIG. 32 illustrates an example of a UHR-SIG content channel for SU transmission.
A. The first user field is encoded like the common field, and the common encoding block consists of the U-SIG overflow + RU allocation subfield + user field 1 + CRC + tail.
B. The user-specific field consists of a user encoding block consisting of one user field (User field 2).
   - In a case different from FIG. 32, the common encoding block is composed of U-SIG overflow + RU allocation subfield + + CRC + tail, and the user-specific field can be encoded by including two user fields. Therefore, in this case, one user encoding block can be composed of two user fields + CRC + Tail.
   - Unlike the above, in the case of transmitting signals by allocating different MCSs and Nss within one L_MRU, the UHR-SIG or next wifi-SIG can be composed by including one user field.

In this case, the UHR-SIG or next wifi-SIG consists of a single RU allocation field and a newly defined user field.

The newly defined user field can contain the same contents or subfields as the MCS and Nss fields.
A. A new variant user field, or a newly defined user field, contains information about the MCS and Nss applied to each block within a single user field.
   i. MCS1 subfield: Indicates the MCS applied to the RU corresponding to block 1 within the MRU, supporting MCS0 to MCS15.
   ii. MCS2 subfield: Indicates the MCS applied to the RU corresponding to block 2 within the MRU, supporting MCS0 to MCS15.
   iii. Nss1 subfield: Indicates the Nss applied to the RU corresponding to block 1 within the MRU. For example, it can be fixed to a maximum of 4 per block, such as in MU-MIMO. In this case, Nss represents a value between 1 and 4.
   iv. Nss2 subfield: Indicates the Nss applied to the RU corresponding to block 2 within the MRU. For example, it can be fixed to a maximum of 4 per block, such as in MU-MIMO. In this case, Nss represents a value between 1 and 4.
   v. The above Nss setting is an example, and alternatively, Nss can be flexibly set, taking into account a maximum of 8. For example, if Nss for the RU of block 1 is 3, Nss for the RU of block 2 can be set to a maximum of 5.

In cases like the above, where the Nss value is flexible, Nss1 and Nss2 can be set to 3 bits.

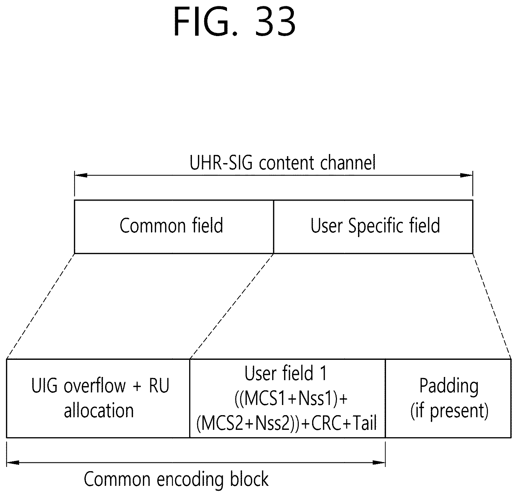

Considering the above MCS and Nss signaling, the newly defined user field can be configured as shown in FIG. 33.

FIG. 33 illustrates an example of a newly defined user field.

Referring to FIG. 33, the User Specific field of the UHR-SIG content channel includes a User Field 1, which includes the MCS1 subfield, the MCS2 subfield, the Nss1 subfield, and the Nss2 subfield.

The User Field 1 is encoded like the Common field, and the Common encoding block consists of the U-SIG overflow + RU allocation subfield + User Field 1 (MCS1 subfield, MCS2 subfield, Nss1 subfield, and Nss2 subfield) + CRC + tail.

### 2) Signal transmission method in MU (OFDMA) transmission

As suggested in the SU transmission above, when transmitting MU PPDU, an indication that data is transmitted by applying different MCS and Nss to blocks (RUs) within L_MRU can be indicated through U-SIG.
i. The indicator can be indicated using the validate or disregards bit of the U-SIG. For example, one of the bits B20-B24, B25 of U-SIG1 and B2, B8 of U-SIG2 can be used.
ii. For the above transmission, the UHR or next wifi-SIG included in the MU-PPDU can be configured as follows:
   - The indication of RU allocation for other MCS and Nss transmissions within the MRU can use the value of the RU allocation subfield defined in Table 10 above.
      a. Since 996+484+242 MRUs are not defined in MU-PPDU, they can be used without specifying them. That is, any RU allocation subfield in Table 10 above, excluding the 996+484+242 MRUs not defined in OFDMA, can be used.
      b. For the same MRU allocation, there are RU allocations for unified MCS and NSS and separate MCS and NSS applications.
   - In order to perform transmission and reception by applying separated MCS and NSS for each block within the MRU, the user field can be configured as follows.
      a. When configuring two user fields for the RU allocation subfield for transmission applying separate MCS and NSS to each block within the above MRU,
         i. Since two user fields are allocated for a single RU allocation subfield, the existing EHT user field can be reused. That is, similar to MU-MIMO transmission, two user fields are always configured for a single RU allocation subfield. The two user fields exist consecutively. Except for the MCS and NSS, the contents or subfields of the two user fields are set identically. Additionally, the STA-IDs included in the two user fields are set identically. As another example, the encoding/coding for the two user fields may be set differently.
      b. When defining a new user field for the RU allocation subfield for transmission that applies separate MCS and NSS to each block within the above MRU,
         i. The newly defined user field is configured to include both MCS and NSS information for each block (RU) corresponding to the RU allocation.
         ii. The user field is configured to include MCS and NSS subfields for block 1 and block 2, respectively.
            MCS1 subfield: MCS for block1 within allocated MRU
            MCS2 subfield: MCS for block2 within allocated MRU
            NSS1 subfield: NSS for block1 within allocated MRU
            NSS2 subfield: NSS for block2 within allocated MRU

In this case, the MCS subfield can be set to 4 bits, considering support for MCS0 to MCS15, as before.

The NSS subfield can be configured as 2 bits in limited applications, such as MU-MIMO, where the maximum number of spatial streams per block is fixed at 4. Conversely, in flexible applications, where the maximum number of spatial streams is 8, the NSS subfield can be configured as 3 bits to indicate the number of spatial streams.

iii. The newly defined user field is also used in transmissions that apply unified MCS and NSS to MRU. In this case, the MCS1 subfield and Nss1 subfield are used to indicate unified MCS and NSS, and the MCS2 subfield and Nss2 subfield are reserved.

### 3) Signal transmission method in UL transmission

The above suggestion can also be applied to UL transmissions, allowing STAs to transmit TB PPDUs to the AP. To transmit information about this, the AP can configure a Trigger frame and transmit it to the STA as follows:
- The reserved bits in the Common Info field of the Trigger frame can be used to indicate the application of different MCSs or Nss within the allocated L_MRU when transmitting TB PPDUs.

For example, one of the reserved bits B22, B26, B53, or B63 in the EHT variant Common Info field can be used to indicate the application of a different MCS or NSS within the allocated L_MRU when transmitting a TB PPDU.

In this case, the indicator can be defined as "different MCS and NSS support in MRU subfield" with the subfield set to 1 to indicate support for the corresponding operation. This is merely an example, and the indicator can also be defined and indicated using another subfield.
- As another example, in the case where a TB PPDU is transmitted by applying different MCSs and Nss within the allocated MRU, an indication for this is made through the RU allocation subfield, and the STA can recognize the operation through the RU allocation subfield. Therefore, in this case, since an indication for transmitting a TB PPDU by applying different MCSs and Nss within the MRU is possible through the RU allocation subfield, an additional subfield may not be defined as above.

During UL transmission, data is transmitted using different MCSs and Nss using the L_MRU blocks proposed above. In this case, allocation for each L_MRU block is indicated using the RU allocation field in the user info field of the Tigger frame.
- When transmitting TB PPDU, the L_MRUs to which different MCSs and Nss are applied are as defined above. In this case, blocks within the L_MRU defined for 80/160/320 MHz can be utilized. In other words, STAs can transmit TB PPDUs using the block configuration within the L_MRU shown in Table 10 above.
- In this case, the configuration or allocation of blocks for each L_MRU shown in Table 10 is indicated using the RU allocation subfield included in the Trigger frame.

Information for the configuration of blocks for applying different MCSs and NSSs within an L_MRU is indicated through the reserved value of the RU allocation subfield of the user info field within the Trigger frame. The 80/160MHz channel to which the MRU is allocated is indicated through the combination of the PS160 subfield included in the user info field and the B0 value of the RU allocation subfield. In this case, the method defined in EHT is reused (using the EHT variant User Info field).

The allocation of block configurations within the L_MRU shown in Table 10 is performed via B1 to B7 of the RU allocation subfield of the user info field of the Trigger frame, and can be indicated using reserved values 102 to 127.

For example, the combination of block configurations within the L_MRU shown in Table 10 can be sequentially indicated using reserved values 102 to 127 of the RU allocation subfield (included in the EHT variant User Info field).

In order to transmit signals by applying different MCS and Nss to the allocated MRU when transmitting TB PPDU using MRU, the User info field included in the Trigger frame can be configured as follows.
i) For example, if the RU allocation subfield of the trigger frame is configured to support transmissions applying different MCSs and Nss to MRUs, as in the above proposal (if the value of the RU allocation subfield is set to a value that supports different MCS and Nss settings), the user info field for the RU allocation subfield is configured with two user info fields. That is, user info fields are configured as a pair for a single RU allocation.

In this case, the two user info fields are configured to include the same AID12.

The two user info fields can be structured similarly to the EHT variant user info field. In this case, all subfields or content except MCS and Nss are set identically. The encodings for the two user info fields can be set differently.

The user info fields can include an indicator for a block within the MRU, which can be defined as a block indication subfield.

For example, when using two blocks within an MRU, the block indication subfield can consist of 1 bit and indicate the blocks configured within the MRU in frequency order or size order.

ii) Additionally, the Trigger frame includes a Trigger Dependent User Info subfield and can be structured as follows:
The Trigger Dependent User Info subfield includes the More user info field present subfield.

The More user info field present subfield indicates whether a use info field with the same AID12 exists following the currently received user info field.

The More user info field present subfield consists of 1 bit. If this subfield is set to 1, it indicates the presence of a subsequent user info field with the same AID12. If this subfield is set to 0, it indicates that only one user info field exists for the corresponding AID12.

The More user info field present subfield can be defined using the reserved bits of the Trigger Dependent User Info subfield, for example, using B5.

The following method is proposed for indicating which block within the MRU set by the RU allocation subfield is being used.

Without additional indicators, the block within the MRU is determined by the RU allocation subfield, and the user field can be sequentially configured accordingly.

iii) As another example, in UHR or next Wi-Fi, the user info field can be newly configured considering the above transmission. In this case, it can be defined as a variant for the new user info field, and the user info field of the new variant (e.g., UHR variant user info field) can be configured as follows.
- When applying different MCSs and Nss to each block within an MRU, the corresponding transmission information is indicated through a single user info field during transmission. In this case, the user info field includes subfields for indicating the MCS and Nss values for each distinct block within the MRU.

For example, when using two blocks, the user info field includes the MCS1 subfield, MCS2 subfield, NSS1 subfield, and NSS2 subfield to indicate the MCS and Nss for block 1 and block 2, respectively.

If different encodings are applied to blocks within an MRU, a coding subfield for each block may be present to indicate this.

If the RU allocation is a traditional MRU allocation, rather than an MRU allocation for a different MCS and NSS, all subfields except for one MCS and NSS are reserved.

For example, when supporting two blocks within an MRU, the MCS1 subfield and NSS1 subfield represent the MCS and NSS applied to the previously allocated MRU when allocating an existing MRU. At this time, the MCS2 subfield and NSS2 subfield are set to reserved.

While this specification describes the application of different MCSs and NSSs within an MRU, this is merely an example, and transmission can be performed by applying one or more of MCS, NSS, or coding differently to each block constituting the MRU. Furthermore, the same method can be applied when an MRU comprises two or more blocks.

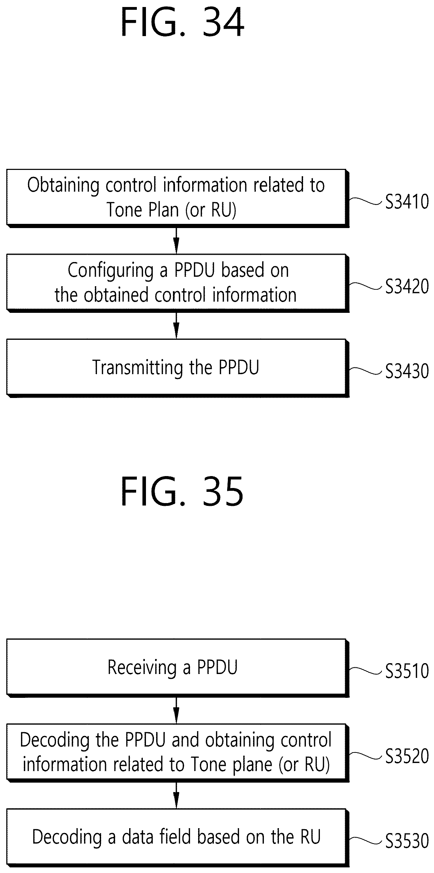

FIG. 34 is a flowchart illustrating the operation of a transmitting device according to the present embodiment.

The example of FIG. 34 may be performed by a transmitting device (AP and/or non-AP STA).

Some of each step (or detailed sub-step to be described later) of the example of FIG. 34 may be skipped/omitted.

Through step S3410, the transmitting device (transmitting STA) may obtain information about the above-described tone plan. As described above, the information about the tone plan includes the size and location of the RU, control information related to the RU, information about a frequency band including the RU, information about an STA receiving the RU, and the like.

Through step S3420, the transmitting device may construct/generate a PPDU based on the acquired control information. Configuring/generating the PPDU may include configuring/generating each field of the PPDU. That is, step S3420 includes configuring the EHT-SIG field including control information about the tone plan. That is, step S3420 includes configuring a field including control information (e.g., N bitmap) indicating the size/position of the RU; and/or configuring a field including an identifier of an STA receiving the RU (e.g., AID).

Also, step S3420 may include generating an STF/LTF sequence transmitted through a specific RU. The STF/LTF sequence may be generated based on a preset STF generation sequence/LTF generation sequence.

Also, step S3420 may include generating a data field (i.e., MPDU) transmitted through a specific RU.

The transmitting device may transmit the PPDU constructed through step S3420 to the receiving device based on step S3430.

While performing step S3430, the transmitting device may perform at least one of operations such as CSD, Spatial Mapping, IDFT/IFFT operation, and GI insertion.

A signal/field/sequence constructed according to the present specification may be transmitted in the form of FIG. 5.

FIG. 35 is a flowchart illustrating the operation of the receiving apparatus/device according to the present embodiment.

The aforementioned PPDU may be received according to the example of FIG. 35.

The example of FIG. 35 may be performed by a receiving apparatus/device (AP and/or non-AP STA).

Some of each step (or detailed sub-step to be described later) of the example of FIG. 35 may be skipped/omitted.

The receiving device (receiving STA) may receive all or part of the PPDU through step S3510. The received signal may be in the form of FIG. 5.

A sub-step of step S3510 may be determined based on step S3430 of FIG. 34. That is, in step S3510, an operation of restoring the result of the CSD, Spatial Mapping, IDFT/IFFT operation, and GI insertion operation applied in step S3430 may be performed.

In step S3520, the receiving device may perform decoding on all/part of the PPDU. Also, the receiving device may obtain control information related to a tone plan (i.e., RU) from the decoded PPDU.

More specifically, the receiving device may decode the L-SIG and EHT-SIG of the PPDU based on the legacy STF/LTF and obtain information included in the L-SIG and EHT SIG fields. Information on various tone plans (i.e., RUs) described in this specification may be included in the EHT-SIG, and the receiving STA may obtain information on the tone plan (i.e., RU) through the EHT-SIG.

In step S3530, the receiving device may decode the remaining part of the PPDU based on information about the tone plan (i.e., RU) acquired through step S3520. For example, the receiving STA may decode the STF/LTF field of the PPDU based on information about one plan (i.e., RU). In addition, the receiving STA may decode the data field of the PPDU based on information about the tone plan (i.e., RU) and obtain the MPDU included in the data field.

In addition, the receiving device may perform a processing operation of transferring the data decoded through step S3530 to a higher layer (e.g., MAC layer). In addition, when generation of a signal is instructed from the upper layer to the PHY layer in response to data transmitted to the upper layer, a subsequent operation may be performed.

Hereinafter, the above-described embodiment will be described with reference to FIG. 1 to FIG. 35.

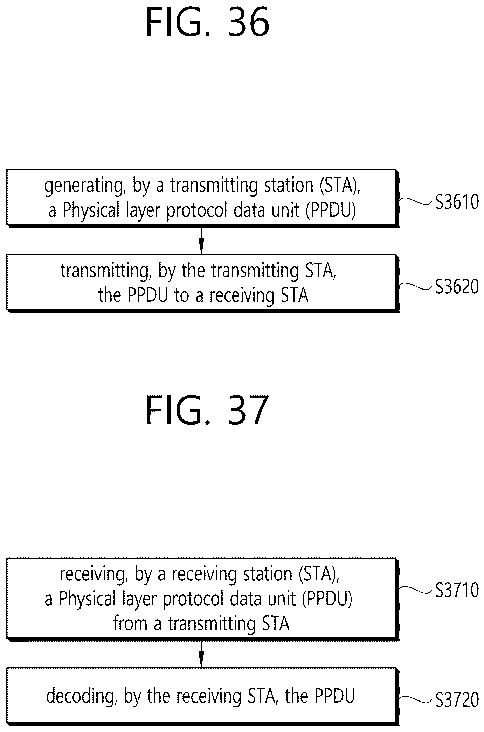

FIG. 36 is a flowchart illustrating a procedure for transmitting a PPDU according to the present embodiment.

The example of FIG. 36 may be performed in a network environment that supports a next-generation wireless LAN system (Ultra High Reliability (UHR) wireless LAN system or next Wi-Fi). The next-generation wireless LAN system is an improved version of the 802.11be system and can satisfy backward compatibility with the 802.11be system.

The example of FIG. 36 is performed at a transmitting STA, which may correspond to an access point (AP). The receiving STA of FIG. 36 may correspond to at least one STA (station).

This embodiment proposes a method for configuring a signal field for transmitting data by applying different MCSs and Nss to two blocks within an MRU. In particular, the present embodiment proposes a method for allocating two blocks within an MRU through one RU allocation subfield within the signal field, and configuring a separate user field for each of the two blocks to indicate the MCS and Nss applied to each block.

In step S3610, a transmitting station (STA) generates a Physical layer protocol data unit (PPDU).

In step S3620, the transmitting STA transmits the PPDU to a receiving STA.

The PPDU includes first and second signal fields and a data field.

The first signal field includes information that the data field is transmitted using/based on a first Modulation and Coding Scheme (MCS) applied to a first frequency block and a second MCS applied to a second frequency block within a single Multiple Resource Unit (MRU).

The second signal field includes a common field and a user-specific field. The common field includes Resource Unit (RU) allocation information for the first and second frequency blocks within the single MRU.

The user-specific field includes a first user field for the first frequency block and a second user field for the second frequency block. The first and second user fields are user fields for a single receiving STA (or the same receiving STA). The first user field includes information for the first MCS applied to the first frequency block. The second user field includes information for the second MCS applied to the second frequency block.

The first signal field may further include information that the data field is transmitted using/based on the first and second Number of Spatial Streams (Nss) within the single MRU.

The first user field may further include information for the first Nss applied to the first frequency block. The second user field may further include information for the second Nss applied to the second frequency block.

Based on a channel status of the first and second frequency blocks, the first frequency block may be transmitted using/based on the first MCS and the first Nss, and the second frequency block may be transmitted using/based on the second MCS and the second Nss. A sum of the first and second Nss may not exceed 8.

In the past, there was a problem that the overall transmission efficiency and throughput decreased when transmitting a signal by commonly applying transmission parameters to MRUs even when the channel status of a specific channel within an MRU was poor due to OBSS, fading, etc. Therefore, this embodiment proposes a method of transmitting a signal by applying different transmission parameters to each block in consideration of the channel status of a specific block (or RU) within one MRU. That is, this embodiment proposes a method of configuring one RU allocation subfield and two user fields to apply different MCS and Nss to each block within the one MRU. That is, by transmitting a signal by applying transmission parameters suitable for the channel status to each block within the one MRU, the overall transmission efficiency and throughput can be improved compared to applying common (or unified) transmission parameters to the one MRU.

In the first and second user fields, content or subfields excluding MCS and Nss may be configured identically.

Based on a bandwidth of the PPDU being 80 MHz, the 80 MHz may include first to fourth 242-tone RUs or first and second 484-tone RUs in order from low to high frequency.

Based on the bandwidth of the PPDU being 160 MHz, the 160 MHz may include first to eighth 242-tone RUs, first to fourth 484-tone RUs, or first and second 996-tone RUs in order from low to high frequency.

Based on the bandwidth of the PPDU being 320 MHz, the 320 MHz may include first to eighth 484-tone RUs or first to fourth 996-tone RUs in order from low to high frequency.

Based on the RU allocation information being set to 304, the MRU may be a 484+242-tone MRU within an 80MHz frequency subblock, and the first frequency block may be related to the second 242-tone RU, and the second frequency block may be related to the second 484-tone RU.

The RU allocation information may include information for a size and location of a resource for the first frequency block and a size and location of a resource for the second frequency block. Specifically, the RU allocation information may indicate information for the size and location of the resource for each block based on a value of a Disregard bit (or reserved bit) of the existing RU allocation subfield. This has the effect of not increasing signaling overhead, as there is no need to define additional signaling separately for resource allocation for each block within the single MRU.

The resource allocation per block within the MRU according to/based on a value of the RU allocation information is as follows.

Based on the RU allocation information being set to 304, the MRU may be a 484+242-tone MRU within an 80MHz frequency subblock, and the first frequency block may be related to the second 242-tone RU, and the second frequency block may be related to the second 484-tone RU. (The MRU pattern is [gap-242]-242-484, and two blocks may be represented as [2nd_242, 2nd_484])

Based on the RU allocation information being set to 307, the MRU may be a 996+484-tone MRU within a 160MHz frequency subblock, and the first frequency block may be related to the second 484-tone RU, and the second frequency block may be related to the second 996-tone RU. (The MRU pattern is [gap-484]-484-996, and two blocks may be represented as [2nd_484, 2nd_996])

Based on the RU allocation information being set to 311, the MRU may be a 996+484+242-tone MRU within a 160MHz frequency subblock, and the first frequency block may be related to the second 242-tone RU and the second 484-tone RU, and the second frequency block may be related to the second 996-tone RU. (The MRU pattern is [gap-242]-242-484-996, and two blocks may be represented as [2nd_242+2nd_484, 2nd_996])

Based on the RU allocation information being set to 319, the MRU may be a 3x996-tone MRU, and the first frequency block may be related to the second 996-tone RU, and the second frequency block may be related to the third 996-tone RU and the fourth 996-tone RU. (The MRU pattern is [gap-996]-996-996-996, and two blocks may be represented as [2nd_996, 2x996 (3rd_996+4th_996)])

Based on the RU allocation information being set to 323, the MRU may be a 3x996+484-tone MRU, and the first frequency block may be related to the second 484-tone RU and the second 996-tone RU, and the second frequency block may be related to the third 996-tone RU and the fourth 996-tone RU. (The MRU pattern is [gap-484]-484-996-996-996, and two blocks may be represented as [2nd_484+2nd_996, 3rd_996+4th_996])

The first signal field may be a Universal-Signal (U-SIG), and the second signal field may be an Ultra High Reliability-Signal (UHR-SIG).

The first user field may be encoded together with the common field to form a common encoding block. The common encoding block may include a U-SIG overflow, the RU allocation information, the first user field, a Cyclic Redundancy Check (CRC), and a Tail. In the user-specific field, the second user field may be formed as a user encoding block. In this case, the user encoding block may include the second user field, a CRC, and a Tail.

FIG. 37 is a flowchart illustrating a procedure for receiving a PPDU according to the present embodiment.

The example of FIG. 37 may be performed in a network environment that supports a next-generation wireless LAN system (Ultra High Reliability (UHR) wireless LAN system or next Wi-Fi). The next-generation wireless LAN system is an improved version of the 802.11be system and can satisfy backward compatibility with the 802.11be system.

The example of FIG. 37 is performed at a receiving STA, which may correspond to at least one station (STA). The transmitting STA of FIG. 37 may correspond to an access point (AP).

This embodiment proposes a method for configuring a signal field for transmitting data by applying different MCSs and Nss to two blocks within an MRU. In particular, the present embodiment proposes a method for allocating two blocks within an MRU through one RU allocation subfield within the signal field, and configuring a separate user field for each of the two blocks to indicate the MCS and Nss applied to each block.

In step S3710, a receiving station (STA) receives a Physical layer protocol data unit (PPDU) from a transmitting STA.

In step S3720, the receiving STA decodes the PPDU.

The PPDU includes first and second signal fields and a data field.

The first signal field includes information that the data field is transmitted using/based on a first Modulation and Coding Scheme (MCS) applied to a first frequency block and a second MCS applied to a second frequency block within a single Multiple Resource Unit (MRU).

The second signal field includes a common field and a user-specific field. The common field includes Resource Unit (RU) allocation information for the first and second frequency blocks within the single MRU.

The user-specific field includes a first user field for the first frequency block and a second user field for the second frequency block. The first and second user fields are user fields for a single receiving STA (or the same receiving STA). The first user field includes information for the first MCS applied to the first frequency block. The second user field includes information for the second MCS applied to the second frequency block.

The first signal field may further include information that the data field is transmitted using/based on the first and second Number of Spatial Streams (Nss) within the single MRU.

The first user field may further include information for the first Nss applied to the first frequency block. The second user field may further include information for the second Nss applied to the second frequency block.

Based on a channel status of the first and second frequency blocks, the first frequency block may be transmitted using/based on the first MCS and the first Nss, and the second frequency block may be transmitted using/based on the second MCS and the second Nss. The sum of the first and second Nss may not exceed 8.

In the past, there was a problem that the overall transmission efficiency and throughput decreased when transmitting a signal by commonly applying transmission parameters to MRUs even when the channel status of a specific channel within an MRU was poor due to OBSS, fading, etc. Therefore, this embodiment proposes a method of transmitting a signal by applying different transmission parameters to each block in consideration of the channel status of a specific block (or RU) within one MRU. That is, this embodiment proposes a method of configuring one RU allocation subfield and two user fields to apply different MCS and Nss to each block within the one MRU. That is, by transmitting a signal by applying transmission parameters suitable for the channel status to each block within the one MRU, the overall transmission efficiency and throughput can be improved compared to applying common (or unified) transmission parameters to the one MRU.

In the first and second user fields, content or subfields excluding MCS and Nss may be configured identically.

Based on a bandwidth of the PPDU being 80 MHz, the 80 MHz may include first to fourth 242-tone RUs or first and second 484-tone RUs in order from low to high frequency.

Based on the bandwidth of the PPDU being 160 MHz, the 160 MHz may include first to eighth 242-tone RUs, first to fourth 484-tone RUs, or first and second 996-tone RUs in order from low to high frequency.

Based on the bandwidth of the PPDU being 320 MHz, the 320 MHz may include first to eighth 484-tone RUs or first to fourth 996-tone RUs in order from low to high frequency.

Based on the RU allocation information being set to 304, the MRU may be a 484+242-tone MRU within an 80MHz frequency subblock, and the first frequency block may be related to the second 242-tone RU, and the second frequency block may be related to the second 484-tone RU.

The RU allocation information may include information for a size and location of a resource for the first frequency block and a size and location of a resource for the second frequency block. Specifically, the RU allocation information may indicate information for the size and location of the resource for each block based on a value of a Disregard bit (or reserved bit) of the existing RU allocation subfield. This has the effect of not increasing signaling overhead, as there is no need to define additional signaling separately for resource allocation for each block within the single MRU.

The resource allocation per block within the MRU according to/based on a value of the RU allocation information is as follows.

Based on the RU allocation information being set to 304, the MRU may be a 484+242-tone MRU within an 80MHz frequency subblock, and the first frequency block may be related to the second 242-tone RU, and the second frequency block may be related to the second 484-tone RU. (The MRU pattern is [gap-242]-242-484, and two blocks may be represented as [2nd_242, 2nd_484])

Based on the RU allocation information being set to 307, the MRU may be a 996+484-tone MRU within a 160MHz frequency subblock, and the first frequency block may be related to the second 484-tone RU, and the second frequency block may be related to the second 996-tone RU. (The MRU pattern is [gap-484]-484-996, and two blocks may be represented as [2nd_484, 2nd_996])

Based on the RU allocation information being set to 311, the MRU may be a 996+484+242-tone MRU within a 160MHz frequency subblock, and the first frequency block may be related to the second 242-tone RU and the second 484-tone RU, and the second frequency block may be related to the second 996-tone RU. (The MRU pattern is [gap-242]-242-484-996, and two blocks may be represented as [2nd_242+2nd_484, 2nd_996])

Based on the RU allocation information being set to 319, the MRU may be a 3x996-tone MRU, and the first frequency block may be related to the second 996-tone RU, and the second frequency block may be related to the third 996-tone RU and the fourth 996-tone RU. (The MRU pattern is [gap-996]-996-996-996, and two blocks may be represented as [2nd_996, 2x996 (3rd_996+4th_996)])

Based on the RU allocation information being set to 323, the MRU may be a 3x996+484-tone MRU, and the first frequency block may be related to the second 484-tone RU and the second 996-tone RU, and the second frequency block may be related to the third 996-tone RU and the fourth 996-tone RU. (The MRU pattern is [gap-484]-484-996-996-996, and two blocks may be represented as [2nd_484+2nd_996, 3rd_996+4th_996])

The first signal field may be a Universal-Signal (U-SIG), and the second signal field may be an Ultra High Reliability-Signal (UHR-SIG).

The first user field may be encoded together with the common field to form a common encoding block. The common encoding block may include a U-SIG overflow, the RU allocation information, the first user field, a Cyclic Redundancy Check (CRC), and a Tail. In the user-specific field, the second user field may be formed as a user encoding block. In this case, the user encoding block may include the second user field, a CRC, and a Tail.

### < Device configuration>

The technical features of the present disclosure may be applied to various devices and methods. For example, the technical features of the present disclosure may be performed/supported through the device(s) of FIG. 1 and/or FIG. 14. For example, the technical features of the present disclosure may be applied to only part of FIG. 1 and/or FIG. 14. For example, the technical features of the present disclosure may be implemented based on the processing chip(s) 114 and 124 of FIG. 1, or implemented based on the processor(s) 111 and 121 and the memory(s) 112 and 122, or implemented based on the processor 610 and the memory 620 of FIG. 14. For example, the device according to the present disclosure receives a Physical layer protocol data unit (PPDU) from a transmitting station (STA); and decodes the PPDU.

The technical features of the present disclosure may be implemented based on a computer readable medium (CRM). For example, a CRM according to the present disclosure is at least one computer readable medium including instructions designed to be executed by at least one processor.

The CRM may store instructions that perform operations including receiving a Physical layer protocol data unit (PPDU) from a transmitting station (STA); and decoding the PPDU. At least one processor may execute the instructions stored in the CRM according to the present disclosure. At least one processor related to the CRM of the present disclosure may be the processor 111, 121 of FIG. 1, the processing chip 114, 124 of FIG. 1, or the processor 610 of FIG. 14. Meanwhile, the CRM of the present disclosure may be the memory 112, 122 of FIG. 1, the memory 620 of FIG. 14, or a separate external memory/storage medium/disk.

The foregoing technical features of the present specification are applicable to various applications or business models. For example, the foregoing technical features may be applied for wireless communication of a device supporting artificial intelligence (Al).

Artificial intelligence refers to a field of study on artificial intelligence or methodologies for creating artificial intelligence, and machine learning refers to a field of study on methodologies for defining and solving various issues in the area of artificial intelligence. Machine learning is also defined as an algorithm for improving the performance of an operation through steady experiences of the operation.

An artificial neural network (ANN) is a model used in machine learning and may refer to an overall problem-solving model that includes artificial neurons (nodes) forming a network by combining synapses. The artificial neural network may be defined by a pattern of connection between neurons of different layers, a learning process of updating a model parameter, and an activation function generating an output value.

The artificial neural network may include an input layer, an output layer, and optionally one or more hidden layers. Each layer includes one or more neurons, and the artificial neural network may include synapses that connect neurons. In the artificial neural network, each neuron may output a function value of an activation function of input signals input through a synapse, weights, and deviations.

A model parameter refers to a parameter determined through learning and includes a weight of synapse connection and a deviation of a neuron. A hyper-parameter refers to a parameter to be set before learning in a machine learning algorithm and includes a learning rate, the number of iterations, a mini-batch size, and an initialization function.

Learning an artificial neural network may be intended to determine a model parameter for minimizing a loss function. The loss function may be used as an index for determining an optimal model parameter in a process of learning the artificial neural network.

Machine learning may be classified into supervised learning, unsupervised learning, and reinforcement learning.

Supervised learning refers to a method of training an artificial neural network with a label given for training data, wherein the label may indicate a correct answer (or result value) that the artificial neural network needs to infer when the training data is input to the artificial neural network. Unsupervised learning may refer to a method of training an artificial neural network without a label given for training data. Reinforcement learning may refer to a training method for training an agent defined in an environment to choose an action or a sequence of actions to maximize a cumulative reward in each state.

Machine learning implemented with a deep neural network (DNN) including a plurality of hidden layers among artificial neural networks is referred to as deep learning, and deep learning is part of machine learning. Hereinafter, machine learning is construed as including deep learning.

The foregoing technical features may be applied to wireless communication of a robot.

Robots may refer to machinery that automatically process or operate a given task with own ability thereof. In particular, a robot having a function of recognizing an environment and autonomously making a judgment to perform an operation may be referred to as an intelligent robot.

Robots may be classified into industrial, medical, household, military robots and the like according uses or fields. A robot may include an actuator or a driver including a motor to perform various physical operations, such as moving a robot joint. In addition, a movable robot may include a wheel, a brake, a propeller, and the like in a driver to run on the ground or fly in the air through the driver.

The foregoing technical features may be applied to a device supporting extended reality.

Extended reality collectively refers to virtual reality (VR), augmented reality (AR), and mixed reality (MR). VR technology is a computer graphic technology of providing a real-world object and background only in a CG image, AR technology is a computer graphic technology of providing a virtual CG image on a real object image, and MR technology is a computer graphic technology of providing virtual objects mixed and combined with the real world.

MR technology is similar to AR technology in that a real object and a virtual object are displayed together. However, a virtual object is used as a supplement to a real object in AR technology, whereas a virtual object and a real object are used as equal statuses in MR technology.

XR technology may be applied to a head-mount display (HMD), a head-up display (HUD), a mobile phone, a tablet PC, a laptop computer, a desktop computer, a TV, digital signage, and the like. A device to which XR technology is applied may be referred to as an XR device.

The claims recited in the present specification may be combined in a variety of ways. For example, the technical features of the method claims of the present specification may be combined to be implemented as a device, and the technical features of the device claims of the present specification may be combined to be implemented by a method. In addition, the technical characteristics of the method claim of the present specification and the technical characteristics of the device claim may be combined to be implemented as a device, and the technical characteristics of the method claim of the present specification and the technical characteristics of the device claim may be combined to be implemented by a method.

## Claims

1. A method in a wireless local area network (WLAN) system, the method comprising:
receiving, by a receiving station (STA), a Physical layer protocol data unit (PPDU) from a transmitting STA; and
decoding, by the receiving STA, the PPDU,
wherein the PPDU includes first and second signal fields and a data field,
wherein the first signal field includes information that the data field is transmitted based on a first Modulation and Coding Scheme (MCS) applied to a first frequency block and a second MCS applied to a second frequency block within a single Multiple Resource Unit (MRU),
wherein the second signal field includes a common field and a user-specific field,
wherein the common field includes Resource Unit (RU) allocation information for the first and second frequency blocks within the single MRU,
wherein the user-specific field includes a first user field for the first frequency block and a second user field for the second frequency block,
wherein the first user field includes information for the first MCS applied to the first frequency block, and
wherein the second user field includes information for the second MCS applied to the second frequency block.

2. The method of claim 1, wherein the RU allocation information includes information for a size and location of a resource for the first frequency block and a size and location of a resource for the second frequency block,
wherein based on a bandwidth of the PPDU being 80 MHz, the 80 MHz includes first to fourth 242-tone RUs or first and second 484-tone RUs in order from low to high frequency,
wherein based on the bandwidth of the PPDU being 160 MHz, the 160 MHz includes first to eighth 242-tone RUs, first to fourth 484-tone RUs, or first and second 996-tone RUs in order from low to high frequency, and
wherein based on the bandwidth of the PPDU being 320 MHz, the 320 MHz includes first to eighth 484-tone RUs or first to fourth 996-tone RUs in order from low to high frequency.

3. The method of claim 2, wherein based on the RU allocation information being set to 304,
the MRU is a 484+242-tone MRU within an 80MHz frequency subblock, and
the first frequency block is related to the second 242-tone RU, and the second frequency block is related to the second 484-tone RU.

4. The method of claim 2, wherein based on the RU allocation information being set to 307,
the MRU is a 996+484-tone MRU within a 160MHz frequency subblock, and
the first frequency block is related to the second 484-tone RU, and the second frequency block is related to the second 996-tone RU.

5. The method of claim 2, wherein based on the RU allocation information being set to 311,
the MRU is a 996+484+242-tone MRU within a 160MHz frequency subblock, and
the first frequency block is related to the second 242-tone RU and the second 484-tone RU, and the second frequency block is related to the second 996-tone RU.

6. The method of claim 2, wherein based on the RU allocation information being set to 319,
the MRU is a 3x996-tone MRU, and
the first frequency block is related to the second 996-tone RU, and the second frequency block is related to the third 996-tone RU and the fourth 996-tone RU.

7. The method of claim 2, wherein based on the RU allocation information being set to 323,
the MRU is a 3x996+484-tone MRU, and
the first frequency block is related to the second 484-tone RU and the second 996-tone RU, and the second frequency block is related to the third 996-tone RU and the fourth 996-tone RU.

8. The method of claim 1, wherein the first signal field further includes information that the data field is transmitted based on first and second Number of spatial streams (Nss) within the single MRU,
wherein the first user field further includes information for the first Nss applied to the first frequency block, and
wherein the second user field further includes information for the second Nss applied to the second frequency block.

9. The method of claim 8, wherein based on a channel status of the first and second frequency blocks, the first frequency block is transmitted based on the first MCS and the first Nss, and the second frequency block is transmitted based on the second MCS and the second Nss, and
wherein a sum of the first and second Nss does not exceed 8.

10. A receiving station (STA) in a wireless local area network (WLAN) system, the receiving STA comprising:
a memory;
a transceiver; and
a processor being operatively connected to the memory and the transceiver,
wherein the processor is configured to:
receive a Physical layer protocol data unit (PPDU) from a transmitting STA; and
decode the PPDU,
wherein the PPDU includes first and second signal fields and a data field,
wherein the first signal field includes information that the data field is transmitted based on a first Modulation and Coding Scheme (MCS) applied to a first frequency block and a second MCS applied to a second frequency block within a single Multiple Resource Unit (MRU),
wherein the second signal field includes a common field and a user-specific field,
wherein the common field includes Resource Unit (RU) allocation information for the first and second frequency blocks within the single MRU,
wherein the user-specific field includes a first user field for the first frequency block and a second user field for the second frequency block,
wherein the first user field includes information for the first MCS applied to the first frequency block, and
wherein the second user field includes information for the second MCS applied to the second frequency block.

11. A method in a wireless local area network (WLAN) system, the method comprising:
generating, by a transmitting station (STA), a Physical layer protocol data unit (PPDU); and
transmitting, by the transmitting STA, the PPDU to a receiving STA,
wherein the PPDU includes first and second signal fields and a data field,
wherein the first signal field includes information that the data field is transmitted based on a first Modulation and Coding Scheme (MCS) applied to a first frequency block and a second MCS applied to a second frequency block within a single Multiple Resource Unit (MRU),
wherein the second signal field includes a common field and a user-specific field,
wherein the common field includes Resource Unit (RU) allocation information for the first and second frequency blocks within the single MRU,
wherein the user-specific field includes a first user field for the first frequency block and a second user field for the second frequency block,
wherein the first user field includes information for the first MCS applied to the first frequency block, and
wherein the second user field includes information for the second MCS applied to the second frequency block.

12. The method of claim 11, wherein the RU allocation information includes information for a size and location of a resource for the first frequency block and a size and location of a resource for the second frequency block,
wherein based on a bandwidth of the PPDU being 80 MHz, the 80 MHz includes first to fourth 242-tone RUs or first and second 484-tone RUs in order from low to high frequency,
wherein based on the bandwidth of the PPDU being 160 MHz, the 160 MHz includes first to eighth 242-tone RUs, first to fourth 484-tone RUs, or first and second 996-tone RUs in order from low to high frequency, and
wherein based on the bandwidth of the PPDU being 320 MHz, the 320 MHz includes first to eighth 484-tone RUs or first to fourth 996-tone RUs in order from low to high frequency.

13. The method of claim 12, wherein based on the RU allocation information being set to 304,
the MRU is a 484+242-tone MRU within an 80MHz frequency subblock, and
the first frequency block is related to the second 242-tone RU, and the second frequency block is related to the second 484-tone RU.

14. The method of claim 12, wherein based on the RU allocation information being set to 307,
the MRU is a 996+484-tone MRU within a 160MHz frequency subblock, and
the first frequency block is related to the second 484-tone RU, and the second frequency block is related to the second 996-tone RU.

15. The method of claim 12, wherein based on the RU allocation information being set to 311,
the MRU is a 996+484+242-tone MRU within a 160MHz frequency subblock, and
the first frequency block is related to the second 242-tone RU and the second 484-tone RU, and the second frequency block is related to the second 996-tone RU.

16. The method of claim 11, wherein the first signal field further includes information that the data field is transmitted based on first and second Number of spatial streams (Nss) within the single MRU,
wherein the first user field further includes information for the first Nss applied to the first frequency block, and
wherein the second user field further includes information for the second Nss applied to the second frequency block.

17. The method of claim 16, wherein based on a channel status of the first and second frequency blocks, the first frequency block is transmitted based on the first MCS and the first Nss, and the second frequency block is transmitted based on the second MCS and the second Nss, and
wherein a sum of the first and second Nss does not exceed 8.

18. A transmitting station (STA) in a wireless local area network (WLAN) system, the transmitting STA comprising:
a memory;
a transceiver; and
a processor being operatively connected to the memory and the transceiver,
wherein the processor is configured to:
generate a Physical layer protocol data unit (PPDU); and
transmit the PPDU to a receiving STA,
wherein the PPDU includes first and second signal fields and a data field,
wherein the first signal field includes information that the data field is transmitted based on a first Modulation and Coding Scheme (MCS) applied to a first frequency block and a second MCS applied to a second frequency block within a single Multiple Resource Unit (MRU),
wherein the second signal field includes a common field and a user-specific field,
wherein the common field includes Resource Unit (RU) allocation information for the first and second frequency blocks within the single MRU,
wherein the user-specific field includes a first user field for the first frequency block and a second user field for the second frequency block,
wherein the first user field includes information for the first MCS applied to the first frequency block, and
wherein the second user field includes information for the second MCS applied to the second frequency block.

19. A computer readable medium including an instruction being executed by at least one processor and performing a method comprising the steps of:
receiving a Physical layer protocol data unit (PPDU) from a transmitting station (STA); and
decoding the PPDU,
wherein the PPDU includes first and second signal fields and a data field,
wherein the first signal field includes information that the data field is transmitted based on a first Modulation and Coding Scheme (MCS) applied to a first frequency block and a second MCS applied to a second frequency block within a single Multiple Resource Unit (MRU),
wherein the second signal field includes a common field and a user-specific field,
wherein the common field includes Resource Unit (RU) allocation information for the first and second frequency blocks within the single MRU,
wherein the user-specific field includes a first user field for the first frequency block and a second user field for the second frequency block,
wherein the first user field includes information for the first MCS applied to the first frequency block, and
wherein the second user field includes information for the second MCS applied to the second frequency block.

20. A device in a wireless local area network (WLAN) system, the device comprising:
a memory; and
a processor being operatively connected to the memory,
wherein the processor is configured to:
receive a Physical layer protocol data unit (PPDU) from a transmitting station (STA); and
decode the PPDU,
wherein the PPDU includes first and second signal fields and a data field,
wherein the first signal field includes information that the data field is transmitted based on a first Modulation and Coding Scheme (MCS) applied to a first frequency block and a second MCS applied to a second frequency block within a single Multiple Resource Unit (MRU),
wherein the second signal field includes a common field and a user-specific field,
wherein the common field includes Resource Unit (RU) allocation information for the first and second frequency blocks within the single MRU,
wherein the user-specific field includes a first user field for the first frequency block and a second user field for the second frequency block,
wherein the first user field includes information for the first MCS applied to the first frequency block, and
wherein the second user field includes information for the second MCS applied to the second frequency block.
